# EUROPÄISCHE PATENTSCHRIFT

(11) **EP 1 012 402 B1**
(45) Veröffentlichungstag und Bekanntmachung des Hinweises auf die Patenterteilung: **10.07.2002**
(21) Anmeldenummer: 98954269.1
(22) Anmeldetag: 11.09.1998
(51) Int. Cl.: E02B 3/04, E02B 3/12

(54) **VERFAHREN ZUR SICHERUNG, VERFESTIGUNG SOWIE NEUGEWINNUNG VON BODENFLÄCHEN UND UNTERGRÜNDEN ÜBER UND UNTER WASSER**
METHOD FOR SECURING, STABILISING AND RECOVERING AREAS OF LAND AND SUBSOIL ABOVE AND BELOW WATER
PROCEDE POUR LA CONSOLIDATION, LA STABILISATION AINSI QUE LA RECUPERATION DE SURFACES DE SOL ET DE TERRAINS DE FONDATION SUR ET SOUS L'EAU

(30) Priorität: 13.09.1997 DE 19740294; 28.11.1997 DE 19752794
(43) Veröffentlichungstag der Anmeldung: 28.06.2000
(73) Patentinhaber: Gabor, Thomas, 65618 Niederselters (DE); Scharping, Dieter Prof.Ing., 24975 Husby (DE)
(72) Erfinder: GABOR, Thomas, D-65618 Niederselters (DE); SCHARPING, Dieter, D-24975 Husby (DE); HARKE, Alfons, D-65618 Niederselters (DE)
(74) Vertreter: Müller, Enno, Dipl.-Ing.
(86) Internationale Anmeldenummer: EP9805761
(87) Internationale Veröffentlichungsnummer: WO9914440

(56) Entgegenhaltungen:
- WO-A-92/01118
- FR-A- 2 643 400
- GB-A- 2 267 724
- NL-A- 8 800 644
- US-A- 3 842 606
- US-A- 4 080 793
- US-A- 4 139 319
- US-A- 4 150 909
- US-A- 4 188 153
- US-A- 5 024 560
- US-A- 5 056 961
- US-A- 5 370 475
- US-A- 5 370 476

## Beschreibung

Die Erfindung betrifft zunächst ein Verfahren zur Sicherung, Verfestigung sowie Neugewinnung von Bodenflächen under Untergründung über und unter Wasser.

Küsten- und Uferbereite, Inseln, Dämme, Deiche, Dünen und andere, bspw. durch Kahlschlag oder Kahlfraß freigelegte Wald- oder Vegetationsböden sind starken Erosionskräften ausgesetzt, welche zum Teil unwiederbringlich wertvollen Untergrundboden abtragen. Küsten- und Uferbereiche, Inseln, Dämme und Deiche werden zudem durch hohe Wasserkräfte belastet, was unter bestimmten Bedingungen zur Zerstörung derselben führen kann. Dünen werden unter Windeinwirkung zu sogenannten Wanderdünen. Wald-, Weide- und andere Vegetationsflächen, welche durch Kahlschlag oder Kahlfraß zerstört sind, werden einer unwiderruflichen Erosion ausgesetzt. Der Mensch hat stets versucht, mit Hilfe ihm zur Verfügung stehender Mittel solchen Schäden zu begegnen. So werden z. B. Dämme und Deiche mit Hilfe spezieller Bepflanzungen oberflächengesichert. Weitere technische Mittel sind bspw. die Bepflasterung mit Steinen oder die Bedeckung mit Bitumen. Küstenbereiche (Strände) werden bspw. mit Flechtwerk aus Ästen, sogenannte Faschinen, gesichert, wobei Ebbe und Flut dazu beitragen, Schlick in solche Art zu schützenden Flächen einzulagern und Neuland zu gewinnen. Dagegen sind erosionszerstörte Wald- und Weideflächen unwiederbringlich verloren, da neu aufgebrachter Humusboden zufolge neu auftretender Erosionskräfte wieder abgetragen wird.

Bei der Errichtung künstlicher Inseln in Flachwassergebieten, bei welchen aufgeschütteter Erdboden mit Hilfe einer Einfassung von vorgefertigten Winkelstützmauern gesichert werden soll, ist immer wieder festzustellen, dass letztere dem steten Druck des aufgeschütteten Erdreiches nicht standhalten können.

Auch sogenannte Tetrapoden (igelförmige Betonkörper), welche durch eine Ineinanderverzahnung eine flächige Oberflächenstruktursicherung von Ufer- und Küstenstreifen bewirken sollen, stellen nur zeitweilige Lösungen von Erosionsproblem dar.

Darüber hinaus sind Überlegungen bekannt, bei welchen Fahrzeugreifen, insbesondere Alt-Fahrzeugreifen, zum Schutz von Bodenflächen usw. eingesetzt werden, welche mittels Beton oder anderer Stoffe ausgefüllt oder umhüllt werden. Bei der Verwendung von Beton handelt es sich in der Regel um sogenannten Sturzbeton.

Die vorstehend beschriebenen Maßnahmen zur Sicherung, Verfestigung sowie Neugewinnung von Bodenflächen über und unter Wasser erweisen sich entweder als sehr arbeits- und kostenintensiv oder aus lokal begründeten Schwierigkeiten als nicht durchführbar. Zum einen erweist es sich schwierig, Materialmengen und -gewicht an meist schwer zugängliche Stellen zu schaffen. Ein weiteres Problem ist es, in den wichtigen und kritischen Bereichen unter Wasser und in größeren Tiefen, die benötigten Materialmengen und lokalen Materialstrukturen anzubringen und zu verarbeiten. Hierzu mussten bislang mit Hilfe von Sinkkästen Unterwasserbauwerke errichtet werden. Alternativ wurden Materialen als Schüttgut ungenau in die zu sichernden Unterwasserbereiche eingebracht.

Zum Stand der Technik ist auch die US-A 4,139,319 bekannt geworden. Aus dieser Druckschrift ist eine Reifenstruktur mit im Reifeninneren aufgenommenen Beton enthalten. Der Beton ist außen anliegend an die Reifen vergossen und im Inneren in einem starren zylindrischen Element aufgenommen. Darüber hinaus ist die US-A 4,080,793 bekannt geworden. Hieraus ist es allgemein bekannt, Reifen mit Beton auszugießen.

Im Hinblick auf den zuvor beschriebenen Stand der Technik wird zunächst eine technische Problemantik der Erfindung darin gesehen, ein verbessertes Verfahren zu Sicherung, Verfestigung sowie Neugewinnung von Bodenflächen und Untergründen über und unter Wasser anzugeben, sowie einen verbesserten Deich und eine verbesserte Netzstruktur.

Die Problematik ist zunächst und im Wesentlichen hinsichtlich des Verfahrens beim Gegenstand des Anspruchs 1 gelöst, wobei darauf abgestellt ist, daß die Sicherung durch netzartig miteinander verbundene (Alt-)Fahrzeugreifen durchgeführt wird, wobei eine Beschwerung mittels in einer Schutzhülle verpreßtem Beton durchgeführt wird. Die Grundlage der einzelnen Anwendungen sind demzufolge Fahrzeugreifen, vorzugsweise Alt-Fahrzeugreifen, welche in praktisch unbegrenzter Menge vorhanden sind und in und/oder an den Fahrzeugreifen angeordnete Schutzhüllen, in welche vor Ort Beton eingepreßt wird. Eine solche Verpressung kann ferngesteuert über Verpreßschläuche erfolgen, womit durch das erfindungsgemäße Verfahren auch in schwer zugänglichen Bereichen eine Beschwerung der Netzstruktur erzielt werden kann. Alt-Fahrzeugreifen sind äußerst kostengünstig zu erwerben und werden vermittels unterschiedlicher Möglichkeiten der Zu- und Anordnung miteinander zu Körpern oder Flächen netzartig miteinander verbunden und über die an- und/oder zugeordneten Schutzhüllen und Verpreßleistungen mit Hilfe flüssigen Betons oder anderer pumpfähiger Verpreßmittel zu einem sehr belastungsfähigen, dabei gleichzeitig flexiblen Zweckgebilde gestaltet, welches den jeweiligen Anforderungen entspricht. Fahrzeugreifen wie auch der verpreßbare Beton sind umweltneutral und beeinflussen den Umwelthaushalt in keiner Weise negativ. Durch die besondere Verpreßtechnik wird ein hochwertiger Beton erzielt, dessen Qualität, bedingt durch die Verpressung mittels einer Schutzhülle, nicht durch bspw. Seewasseranteile gemindert wird. Bei der Einfüllung von Substraten in den Schutzhüllenbereich von Reifen-Netzstrukturen ist gewährleistet, daß das Substrat auch über lange Verfüllstrecken ungeschädigt zum Zielort -der Netzstruktur- gelangt. Alternativ oder kombinativ ist es auch denkbar, zur Herstellung der erfindungsgemäßen Netzstruktur andere gummiartige Werkstoffe oder Kunststoffe in Form von Profilen oder Hohlkörpern zu nutzen. Die netzartige flächige Anordnung von Alt-Fahrzeugreifen findet bspw. Verwendung zum Schutz von Dünen, Deichen und erodierten bzw. einer Erosion ausgesetzten Bodenflächen. So ist vorgesehen, daß die Fahrzeugreifen zunächst netzartig miteinander verbunden werden und sodann auf eine zu sichernde Bodenfläche aufgelegt oder eingebracht werden. Insbesondere bei einer Verwendung der netzartig miteinander verbundenen Fahrzeugreifen zur Sicherung bzw. Verfestigung von Dünen ergibt sich der vorteilhafte Effekt, daß durch Windeinwirkung aufgewirbelter Sand sich in den nicht vorverpreßten Reifeninnenräumen anlagert, womit sich ein Eingrabungseffekt der Netzstruktur ergibt. Dieser Effekt läßt sich auch bei einer Verwendung zur Sicherung von Deichen, Ufer- und Küstenregionen, insbesondere im Unterwasserbereich feststellen. Hier wird durch die Wasserströmung Sand, Schlick und dergleichen in den nicht vorverpreßten Reifeninnenräumen eingelagert. Desweiteren ist in dem erfindungsgemäßen Verfahren auch eine mehrschichtige Anordnung von netzartig miteinander verbundenen Fahrzeugreifen durchführbar. Es besteht weiter die Möglichkeit, im Zuge des Verfahrens die jeweils durch eine Schutzhülle vorbereiteten Fahrzeugreifen nach Auflage auf die Bodenfläche zu verfüllen. So kann bspw. vorgesehen sein, daß die Fahrzeugreifen mit Beton, Substraten oder anderen Verfüllmitteln zum Zwecke des Beschwerens sowie zur Erzielung einer gesamtvolumigen Beschaffenheitsstruktur lokal gezielt verpreßt werden. Diese Maßnahme dient zum Zwecke des Beschwerens und des besseren Verharrens auf der jeweiligen Bodenfläche, wobei einzelne oder mehrere Reifen, ganz oder teilweise verpreßt werden. Die zur Beschwerung verpreßten Reifen wirken unter Wasser wie durch ihr Gewicht wirkende Anker- oder Mauerwerkskonstruktionen. Das Verpressen mit Beton oder anderen Verfüllmaterialien geschieht in der Form, daß von einer Betonpumpe oder einem Gebläse aus Schläuche zu in den Reifen eingelagerten, durchlässigen Gewebeschläuchen- oder Doppelflächen führen und hierüber flüssiger Beton oder luftangereicherte Substrate in die Schläuche- oder Gewebeflächen eingebracht wird. Dabei verbleiben lediglich die festen Bestandteile des gepumpten Materials im Schlauch- oder Gewebeflächeninneren; überflüssiges Wasser oder Luft als Transportmittel treten durch die Gewebemaschen nach außen. Dieses Verfahren ist sowohl über als auch unter Wasser durchführbar. Alternativ hierzu kann auch vorgesehen sein, daß die Fahrzeugreifen bzw. die Schutzhüllen mit Erde ausgefüllt werden. So können zum Schutz von bspw. einer Erosion ausgesetzten bzw. bereits erodierten Bodenflächen die lichten Zwischenräume innerhalb und außerhalb der Fahrzeugreifen mit Humus oder Mutterboden verfüllt werden, zur Bildung einer Grundlage für eine Vegetation (Gras, Dünengras, Strandhafer, Gehölze etc.). Ist eine Vegetation unter Wasser gewünscht (Seegras, bestimmte Algen etc.), so können Substrate, vermischt mit den entsprechenden Pflanzenkeimen oder Samen, ebenfalls unter Wasser in die lichten Zwischenräume, bevorzugt mittels Schutzhüllen verpreßt werden. In einer vorteilhaften Weiterbildung des Erfindungsgegenstandes ist vorgesehen, daß die netzartige Verbindung als räumliche Struktur mehrerer Lagen von Fahrzeugreifen ausgeführt ist. Werden so mehrere Lagen von netzartig miteinander verbundenen Fahrzeugreifen übereinandergeschichtet, wobei auch die Schichten untereinander verbunden und hiernach, bevorzugt mit Beton, verpreßt sein können, kann auf diese Weise ein sehr stabiler Dammkern gebildet werden, welcher zufolge der Gummischichten der Reifen in sich selber genügend flexibel ist, um auftretende Bauwerks- und Untergrundbewegungen aufzunehmen. Solche Reifendämme eignen sich auch hervorragend dort, wo z. B. in Flachwassergebieten Aufschüttungen für z. B. Inseln für Wohn- und Vegetationszwecke erfolgen sollen. Die durch das erfindungsgemäße Verfahren gebildeten Reifendämme sind kostengünstiger und funktionsverbessert gegenüber den bisher verwendeten Winkelstützmauern. Bei der Errichtung von atollähnlichen Reifenmauern können die äußeren Reifenschichten unverpreßt bleiben, um mit einem geeigneten Substrat für eine Vegetation verfüllt werden zu können. Die räumliche Anordnung von Alt-Fahrzeugreifen, besonders bei einer großvolumigen Anordnung im Unterwasserbereich, dient bspw. zum Schutz von Deichen oder dergleichen, wobei solche Gebilde einen laminar verlaufenden Wasserstrom in Turbulenzen versetzt, was zur Folge hat, daß z. B. Sand, Schlick usw. nicht mehr weggespült werden können, sondern vielmehr zufolge der Turbulenzströmung aufgehalten und in das räumliche Reifengebilde eingelagert werden. Es kommt hierbei zu einem Eingrabungseffekt in den Untergrund, wie dieser bspw. bei sogenannten Tetrapoden aus Beton oder Stahl, welche im bekannten Stand der Technik als Oberflächensicherung dienen, bekannt ist. Letztere werden jedoch immer weiter in den Unterboden eingearbeitet und erfüllen letztendlich nicht mehr ihren Zweck, da diese, im Gegensatz zur beschriebenen Reifenanordnung, nicht miteinander verbunden sind.

Durch das erfindungsgemäße Verfahren können Turbulenz erzeugende, großvolumige, verpreßte Reifenanordnung von praktisch unbegrenzter Länge und Dicke wie ein flexibler und gegebenenfalls undurchlässiger Kettenpanzer an dem zu schützenden Untergrund angelegt werden. Sollen erfindungsgemäße Baustrukturen unter Wasser errichtet werden, so erweist es sich als vorteilhaft, daß die Netzstruktur auf einer schwimmfähigen Tragvorrichtung erstellt wird. Letztere kann auch als Hilfskonstruktion zum Abgleiten auf die Wasseroberfläche bei einer Erstellung der Netzstruktur am Ufer dienen. Hierzu wird vorgeschlagen, daß die Netzstruktur kontinuierlich unter Ablassen eines fertiggestellten Abschnitts auf eine Wasserfläche erstellt wird. Wesentlich hierbei ist, daß keine aufwendigen Maschinen und Geräte benötigt werden. Durch die erfindungsgemäße Ausgestaltung ist die Montage und der Transport der Netzstruktur wesentlich vereinfacht. Die auf der als Hilfs-Montagegerüst ausgebildeten Tragvorrichtung vorgefertigte Reifenstruktur gleitet zunächst auf die Wasseroberfläche ab und kann hiernach in einfachster Weise durch Zugboote in die vorgesehene Position gebracht und dort abgesenkt werden. Als vorteilhaft erweist es sich hierbei, daß die Netzstruktur mit Auftriebskörpern ausgerüstet wird. Letztere können in einfachster Form luftgefüllte Plastik- oder Gummischläuche sein. Desweiteren ist vorgesehen, daß das Verpressen mit Beton nach Auflage auf einer Bodenfläche (bspw. Meeresboden) unter Wasser durchgeführt wird. Hierzu wird weiter vorgeschlagen, daß im Zuge der Erstellung der Netzstruktur auch eine Verbindung von Verpreßschläuchen durchgeführt wird. Weiter kann erfindungsgemäß jede Art von Verpressung, insbesondere mit Beton, über und unter Wasser dahingehend kontrolliert werden, daß die vollständige Verpressung der mit den Schutzhüllen versehenen Fahrzeugreifen beobachtet werden kann. Diesbezüglich wird vorgeschlagen, daß eine vollständige Verpressung über und unter Wasser über einen Kontrollschlauch kontrolliert wird. Durch diesen, mit der Netzstruktur verbundenen Kontrollschlauch kann im besonderen bei einer Unterwasserverpressung durch am freien Ende austretendes Verpreßmittel der Grad der Befüllung angezeigt werden. Bevorzugt wird dieses freie Ende mit einem Kontrollstrumpf (Gewebestrumpf) versehen. Bei einer Verpressung mit Beton beweist und zeigt der Konstrollstrumpf durch eine harte Konsistenz an, daß ebenfalls die Verpressung in der Netzstruktur stattgefunden hat. Ist der Kontrollstrumpf noch weich, so ist die Verpreßhärte der Schutzhüllen der Netzstruktur ebenfalls weich. Die Kontrollstrümpfe lassen sich auch an jeder Stelle der zu verfüllenden Körper über und unter Wasser plazieren. Somit ist eine Remote-Controll-Funktion gegeben. Ein Verpressen der abgesenkten Netzstruktur erfolgt somit über lange Schlauchleitungen von Land oder gegebenenfalls von der schwimmenden Tragvorrichtung bzw. einem Boot aus. Durch die Anordnung von Gewebeschläuchen in der Netzstruktur kann durch eine Verpressung eine geschlossenvolumige Struktur geschaffen werden. Es können somit beliebig dicke Betonkörper geschaffen werden, welche durch die umhüllenden bzw. innenliegenden Reifen eine flexibel wirkende Bewehrung darstellen. Durch die gezielte Verpreßtechnik ist es möglich, an jedem gewünschten Ort und in jeder Wassertiefe einen einwandfreien durch bspw. Seewasser nicht verunreinigten Beton herzustellen. Im Gegensatz zum bekannten Stand der Technik können Unterwasserarbeiten, wie z. B. die Erstellung neuer Riffe und Inseln, bequem von der Wasseroberfläche aus ferngesteuert durchgeführt werden. Die Verwendung von Verpreßschläuchen ist kostengünstig, da hierzu handelsübliche Steck- und Verbindungssysteme genutzt werden können. Mit Hilfe handelsüblicher Gerüstrohrverbindungen als Tragvorrichtung mit unterseitigen Pontons oder Fässern als Schwimmkörpern kann jede beliebige Montageplattform errichtet werden. Teure und umständliche Zugmaschinen, um das Reifengebilde von Land ins Wasser zu ziehen, entfallen. Die vorgeschlagene Tragvorrichtung wirkt in Art eines Webstuhls. Die jeweils montierten Reifenabschnitte gleiten auf die Wasseroberfläche, wo sie mittels der erwähnten Auftriebskörper so lange an der Oberfläche bleiben, bis sie am Ort der beabsichtigten Plazierung abgesenkt werden. Ist der flexible Reifenteppich, bzw. die dreidimensionale Reifenstruktur, abgesenkt, paßt sich diese den Unebenheiten des Meeresbodens an. Erst nach dem Verpressen bspw. mit Beton erhält die Struktur ihre Festigkeiten so, als wäre sie auf dem Meeresboden aufgegossen. Teure Taucharbeiten werden bei dem erfindungsgemäßen Verfahren lediglich für Kontroll- und vereinzelte Montagezwecke benötigt.

Die Erfindung betrifft desweiteren einen Deich, wie einen Seedeich oder Flußdeich, mit einer Außenböschung und Binnenböschung. Hier wird zur Verfestigung und Sicherung des Deiches vorgeschlagen, daß die Außenböschung und/oder die Binnenböschung durch aufliegende, untereinander zu einer Netzstruktur verbundene und verpreßte Fahrzeugreifen gesichert ist. Die Ursachen für das Auftreten von Schäden am Deichkörper sind manigfaltig. An erster Stelle stehen die durch die Wasserkraft (Strömung, Wellen, Brandung, Eis) hervorgerufenen Beschädigungen. Hierzu gehören u. a. von der Brandung in die Deichböschungen geschlagene Löcher. Ferner sind es Witterungserscheinungen (Niederschläge, Frost, Trokkenheit), die Abschwemmungen des Deichbodens, Schäden an der Grasnarbe und Schwundrisse im Deichkörper hervorrufen. Desweiteren gefährdet auch der Mensch durch Unachtsamkeit den Deich, so bspw. durch Befahren des Deiches auf nicht hierzu vorgesehenen Flächen oder auch durch Bildung von Trampelpfaden oder dergleichen. Es ist bekannt, angreifende Wasserkräfte durch bauliche Maßnahmen abzuwehren, zu schwächen oder unschädlich zu machen. Hierbei unterscheidet man zwischen dem aktiven (natürlichen) und dem passiven (künstlichen) Deichschutz. Beim passiven Deichschutz werden die Angriffskräfte durch unmittelbar an der Deichlinie liegende Schutzwerke (Uferbefestigungen aus Busch, Stein oder Bitumen, Buhnen, Leitdämme usw.) oder zusätzlich durch Sicherungswerke auf dem Deichkörper selbst (Deckwerke, Deichmauern) aufgefangen. Diese bekannten Maßnahmen erweisen sich zumeist entweder als sehr arbeits- und kostenintensiv oder als nicht erfolgreich. Durch die erfindungsgemäße Anordnung von zu einer Netzstruktur verbundenen und bspw. mit Beton verpreßten Fahrzeugreifen, insbesondere Alt-Fahrzeugreifen, auf die Böschung des Deiches, ist in einfachster und äußerst kostengünstiger Weise ein Deichschutz gegeben. Bevorzugt wird hierbei eine Anordnung, bei welcher die Netzstruktur mehrlagig ist. Durch diese Ausgestaltung wird ein laminar verlaufender Wasserstrom, welcher dem Deichboden in ungeschützter Form zusetzt, in Turbulenzen versetzt. Dies hat zur Folge, daß Sand, Schlick usw. nicht weggespült werden kann. Vielmehr ergibt sich der vorteilhafte Effekt, daß Sand, Schlick usw. in das räumliche Reifengebilde eingelagert wird. Bevorzugt wird eine Ausgestaltung, bei welcher die Netzstruktur zur Deichkrone hin abgestuft ausläuft. So kann bspw. unterhalb eines maximalen Wasserspiegels eine dreioder mehrlagige Anordnung von Fahrzeugreifen-Netzstrukturen vorgesehen sein, wobei weiter diese Lagen untereinander verbunden sein können. Oberhalb des maximalen Wasserspiegels ist die Netzstruktur lediglich einlagig ausgebildet, wobei in diesem Bereich bspw. ein Ausfüllen der Fahrzeugreifen und der zwischen diesen gebildeten Freiräume mit in Gewebeschläuchen verpreßtem Mutterboden gegeben sein kann. Weiterhin erweist es sich als vorteilhaft, daß die Netzstruktur über die Böschung hinaus sich bis in das Vorland erstreckt. So ist bspw. vorgesehen, daß wasserseitig eines Seedeiches die Netzstruktur sowohl die Außenböschung als auch die dieser vorgelagerte Außenberme sichert. Zum Zwecke des Beschwerens und des besseren Verharrens auf diesen Flächen wird bevorzugt, einzelne Reifen ganz und auch miteinander über Gewebeschläuche mit Beton oder anderem Verfüllgut zu verpressen. Auch binnenseitig kann der Deich mit einer, bspw. einlagigen Netzstruktur von Fahrzeugreifen gegen Erosion und mechanische Beanspruchung geschützt sein, wobei auch hier die Netzstruktur sich über die Binnenböschung hinaus über die Binnenberme erstrecken kann.

Desweiteren betrifft die Erfindung eine Netzstruktur von Fahrzeugreifen, insbesondere zur Verwendung in einem Verfahren nach den Ansprüchen 1 bis 12 oder zur Ausbildung eines Deiches nach den Ansprüchen 13 bis 16, wobei zur Verbesserung einer solchen Netzstruktur vorgeschlagen wird, daß die Netzstruktur mittels in einer Schutzhülle verpreßtem Beton beschwert ist. Die Verpressung mit Beton erfolgt durch die erfindungsgemäße Ausgestaltung zielgenau und bevorzugt ferngesteuert, indem die Befüllung der Schutzhüllen über angeschlossene Verbindungsschläuche erfolgt, welche gegebenenfalls gebündelt abseits des Betonierortes an einen Kompressor oder dergleichen angeschlossen sind. Als vorteilhaft erweist es sich hierbei, daß die Schutzhülle ein Schlauch ist, welcher bspw. in das Reifeninnere eingelegt ist. Insbesondere bei einer Erstellung der erfindungsgemäßen Netzstruktur unter Wasser ist vorgesehen, daß die Schutzhülle wasserundurchlässig ist, womit der eingepreßte Beton oder ein anderes Verpreßmaterial nicht bspw. durch Seewasser verunreinigt wird. Alternativ oder kombinativ kann auch vorgesehen sein, daß das in der Schutzhülle verpreßte Betonelement den Fahrzeugreifen in Achsrichtung durchsetzt. Hierzu wird bevorzugt ein Strumpf, insbesondere ein Gewebestrumpf genutzt. Als wesentlicher Vorteil erweist sich hierbei, daß die Betonelemente durch Verpressen in einen kraftund/oder formschlüssigen Verbund mit den Fahrzeugreifen sind. Eine solche erfindungsgemäße Netzstruktur von insbesondere Alt-Fahrzeugreifen, kann zur Sicherung, Verfestigung sowie Neugewinnung unterschiedlicher Bodenflächen und Untergründen, sowohl über als auch unter Wasser genutzt werden. Hierzu wird weiter vorgeschlagen, daß zwei Fahrzeugreifen unter Durchsetzung der Laufflächen miteinander verbolzt sind. So können die mit ihren Laufflächen aneinanderliegenden Alt-Fahrzeugreifen in einfachster Weise bspw. vermittels Verschraubung miteinander verbunden werden, bspw. zur Erzielung einer Kette von mehreren, durchaus auch unterschiedlichen Alt-Fahrzeugreifen. Alternativ kann die Verbindung auch so gewählt sein, daß zwei Fahrzeugreifen mittels einer Schlinge, wie einer Drahtschlinge, miteinander verbunden sind. Weiter sind auch Verbindungen durch Ketten, Draht oder andere Klammerglieder denkbar. Diese Verbindungsmöglichkeiten dienen insbesondere zur Bildung einer flächigen Netzstruktur. Alternativ oder auch kombinativ kann vorgesehen sein, daß ein Fahrzeugreifen schlingenartig zwei weitere Fahrzeugreifen miteinander verbindet. Hierbei werden alle Reifen wie ein Gebilde aus Kettengliedern beliebig miteinander verbunden, wodurch eine räumliche Anordnung von Fahrzeugreifen erzielt wird. Eine solche räumliche Anordnung ist auch durch Verbindung mit einer Schlinge oder durch Verbolzung möglich. Der Vorteil einer solchen räumlichen Anordnung besteht in dem so erzielten großzügigen Raumvolumen sowie in der besseren Beweglichkeit gegenüber dem Untergrund. Die so gebildete Netzstruktur weist eine verbesserte Anpassungsfähigkeit auf. In vorteilhafter Weise ist vorgesehen, daß der verbindende Fahrzeugreifen oder die verbundenen Fahrzeugreifen aufgetrennt und wieder miteinander verbunden sind. Diesbezüglich ist weiter vorgesehen, daß die aufgetrennten Fahrzeugreifen einen im wesentlichen radial geführten Trennschnitt aufweisen und unter Überlappung an der Trennstelle wieder miteinander verbunden sind. Diese Verbindung erfolgt in bevorzugter Ausgestaltung durch Verbolzung. Es sind jedoch auch andere Möglichkeiten zur Wiederverbindung des aufgetrennten Fahrzeugreifens denkbar, so bspw. durch Vulkanisierung. In weiterer Ausgestaltung des Erfindungsgegenstandes ist vorgesehen, daß ein Fahrzeugreifen mit mindestens zwei weiteren Fahrzeugreifen verbunden ist. Bevorzugt wird eine Ausgestaltung, bei welcher ein Fahrzeugreifen mit einer Verfüllmasse ausgefüllt ist, wobei die Verfüllmasse zum Beschweren der Netzstruktur bzw. zur Bildung eines Ankers bevorzugt Beton ist. Letzterer kann sowohl über als auch unter Wasser verpreßt werden. Diesbezüglich ist es weiter denkbar, daß der Beton den Reifeninnenraum ausfüllt, d. h. die Reifenöffnung freilassend. Alternativ kann auch vorgesehen sein, daß der Beton den Fahrzeugreifen vollständig, einschließlich der freien Reifenöffnung, ausfüllt. Der einzupressende Beton kann direkt in die lichten Zwischenräume innerhalb und auch außerhalb der Reifen gepreßt werden. Es wird jedoch eine Ausgestaltung bevorzugt, bei welcher in dem Reifeninnenraum ein mit Beton verpreßter Gewebeschlauch aufgenommen ist. So kann von einer Betonpumpe aus der Beton über Schläuche zu den in den Reifen eingelagerten durchlässigen Gewebeschläuchen oder auch Doppelflächen geführt werden. Hierbei verbleiben nur die festen Bestandteile des gepumpten Materials im Gewebeschlauch, das überflüssige Wasser tritt durch die Gewebemaschen nach außen. Diese Art der Betonverpressung ist auch zur vollständigen Ausfüllung des Fahrzeugreifens geeignet, wobei hier in dem Fahrzeugreifen ein, den gesamten Reifendurchmesser ausfüllender, mit Beton verpreßter Gewebeschlauch aufgenommen ist. Diesbezüglich wird weiter bevorzugt, daß ein Gewebeschlauch einen Füllanschluß aufweist. An letzterem wird der mit der Betonpumpe verbundene Schlauch angeschlossen. Um bei einer Netzstruktur von einer Vielzahl von Fahrzeugreifen nicht jeden einzelnen Gewebeschlauch zum Befüllen mit Beton zu bedienen, ist in vorteilhafter Weise vorgesehen, daß ein Gewebeschlauch zwei Füllanschlüsse als Ein- und Auslaßanschlüsse aufweist. Darüber hinaus sind auch mehr als zwei Füllanschlüsse denkbar. So können die einzelnen Gewebeschläuche über schlauch- oder rohrartige Verbindungsstücke, welche jeweils einerends mit einem Auslaßanschluß eines ersten Gewebeschlauches und anderenends mit einem Einlaßanschluß eines nächsten Gewebeschlauches verbunden sind, zur Befüllung in Reihe oder Serie geschaltet werden. Weiter besteht die Möglichkeit, daß an einem Füllanschluß ein Kontrollschlauch angeschlossen ist. Letzterer dient zur Überwachung des Verpreßzustandes der Netzstruktur, unabhängig davon, ob eine Verpressung über oder unter Wasser erfolgt. Bevorzugt wird hierbei eine Ausgestaltung, bei welcher an dem Kontrollschlauch ein mit Beton verpreßter Kontrollstrumpf angeordnet ist. Letzterer dient hierbei als Indikator für den Verpreßzustand, insbesondere bei der Verpressung von nicht oder nur schlecht einsehbaren Netzstrukturen, wie bei der Verpressung unter Wasser. Der ausgehärtete Kontrollstrumpf kann darüber hinaus auch archiviert und für spätere Analysezwecke genutzt werden. Um eine vollflächige Betonverpressung des gesamten Netzwerkes zu bieten, ist es zweckmäßig, daß bei einem flächigen Aneinanderlegen von Fahrzeugreifen entstehende Zwickel mit Beton verfüllt sind. Hierbei ist es auch denkbar, daß die Zwickel durch einen, einen Füllanschluß aufweisenden Gewebeschlauch mit Beton verpreßt werden. Auch letzterer kann hierzu zwei Füllanschlüsse als Ein- und Auslaßanschlüsse aufweisen, um diese mit den Gewebeschläuchen in den Fahrzeugreifen zu verbinden. Die erwähnten Füllanschlüsse können in Form von bekannten Verpreßnippeln ausgebildet sein, bei welchen ein Nippel der Zuführung von Verpreßmasse dient und der andere Nippel die Verpreßmasse weiter zu anderen Gewebeschlauchkörpern leitet. Letztere sind in vorteilhafter Weise derart weitergebildet, daß in dem Gewebeschlauch ein Spreizring angeordnet ist, welcher aus beliebigem Material mit einem Durchmesser gleich etwa dem Innendurchmesser eines Reifens bestehen kann und zur Vorfixierung des Gewebeschlauches in dem Fahrzeugreifen dient. Alternativ zur Verfüllmasse aus Beton ist auch ein Verfüllen der lichten Zwischenräume innerhalb und außerhalb der Fahrzeugreifen mit Humus oder Mutterboden denkbar, dies als Grundlage für eine Vegetation. Ist eine Vegetation unter Wasser gewünscht, so kann vorgesehen sein, daß die Verfüllmasse ein Substrat ist, vermischt mit Pflanzenkeimen und/oder Pflanzensamen. Diese können ebenfalls unter Wasser verpreßt werden. Erfindungsgemäß sind die Anordnungen der einzelnen Fahrzeugreifen mit- und zueinander dergestalt, daß diese im Grundprinzip wie folgt verbunden werden können. Zum ersten durch direktes Verbolzen von jeweils zwei zueinander befindlichen Reifenflächen. Desweiteren durch Verbinden von Reifen in loser Art, mit Hilfe von Ketten- oder Drahtschlingen oder solchen aus anderen geeigneten Materialien, wie Seile usw. Weiter ist auch ein Verbinden von Reifen vermittels eines vorher aufgeschnittenen und später wieder zu einem geschlossenen Ring zusammengefügten Reifen möglich, wobei letzterer auf einfache Art verbolzt wird. Bei der Anordnung der Reifen zueinander sind flächige oder auch räumliche Gebilde möglich, so bspw. flächige und parallel zueinander geordnete, auch mehrlagige Schichten, welche teil- oder auch ganzflächig verpreßt sein können. Desweiteren auch räumliche Gebilde von beliebiger Dicke und Länge, welche verpreßt oder auch offen belassen sein können.

Sowohl das erfindungsgemäße Verfahren als auch der erfindungsgemäße Deich, und die erfindungsgemäße Netzstruktur erweisen sich als äußerst kostengünstig, da die Grundmaterialien -wie Alt-Fahrzeugreifen- dem Anwender nahezu keine Kosten verursachen. Auch aus wirtschaftlicher Sicht bieten sich enorme Vorteile. Im Rahmen der erfindungsgemäßen Anwendung können Arbeitsplätze geschaffen werden. Der Synergieeffekt ist enorm und in seinem positiven Verlauf noch nicht abzusehen.

Nachfolgend ist die Erfindung anhand der beigefügten Zeichnung, welche lediglich mehrere Ausführungsbeispiele darstellt, näher erläutert. Es zeigt:
- Fig. 1: eine schematische Querschnittsdarstellung durch einen Seedeich mit einer auf der Außenböschung angeordneten Netzstruktur von Fahrzeugreifen;
- Fig. 2: eine Herausvergrößerung gemäß dem Bereich II in Fig. 1;
- Fig. 3: eine Querschnittsdarstellung durch einen Verbindungsbereich zwischen zwei Fahrzeugreifen, wobei diese durch Verbolzung miteinander verbunden sind;
- Fig. 4: eine Reifenanordnung, bei welcher ein Fahrzeugreifen schlingenartig zwei weitere miteinander verbindet;
- Fig. 5: eine Reifenanordnung, bei welcher die Verbindung zweier Fahrzeugreifen vermittels einer Schlinge erfolgt;
- Fig. 6: eine Draufsicht auf eine räumliche Netzstruktur von Fahrzeugreifen, bei einer gewählten Verbindung gemäß Fig. 4;
- Fig. 7: eine schematische perspektivische Darstellung der räumlichen Netzstruktur gemäß Fig. 6;
- Fig. 8: eine weitere Verbindungsanordnung von Fahrzeugreifen in einer Ansicht;
- Fig. 9: die Draufsicht zu Fig. 8;
- Fig. 10: einen aufgetrennten Fahrzeugreifen in Ansicht;
- Fig. 11: den Fahrzeugreifen gemäß Fig. 10, wobei unter Überlappung an der Trennstelle der Fahrzeugreifen wieder kreisringförmig geschlossen ist, partiell geschnitten;
- Fig. 12: eine flächige Anordnung von Alt-Fahrzeugreifen, welche untereinander über ihre Laufflächen verbolzt sind;
- Fig. 13: einen, aus übereinander geschichteten Netzstrukturen gebildeten Damm;
- Fig. 14: eine Draufsicht auf eine Netzstrukturanordnung, bei welcher lotrechte Schichten übereinander versetzt gelagert sind;
- Fig. 15: den Schnitt gemäß der Linie XV-XV in Fig. 14, wobei die Fahrzeugreifen mit Beton verpreßt sind;
- Fig. 16: eine einlagige Anordnung einer Netzstruktur in einer geschnittenen Darstellung, bei welcher sowohl die Reifeninnenräume als auch die zwischen den Reifen gebildeten Zwickel mit Beton verpreßt sind;
- Fig. 17: den Schnitt gemäß der Linie XVII-XVII in Fig. 16;
- Fig. 18: eine der Fig. 16 entsprechende Schnittdarstellung, wobei hier jedoch lediglich die Reifeninnenräume vermittels eingelegter Gewebeschläuche verfüllt sind;
- Fig. 19: den Schnitt gemäß der Linie XIX-XIX in Fig. 18, in vergrößerter Darstellung;
- Fig. 20: einen Gewebeschlauch im Querschnitt;
- Fig. 21: eine der Fig. 18 entsprechende Darstellung, jedoch bei vollständiger Verpressung des Fahrzeugreifens, einschließlich der freien Reifenöffnung mit Beton;
- Fig. 22: den Schnitt gemäß der Linie XXII-XXII in Fig. 21;
- Fig. 23: eine Schnittdarstellung einer räumlichen Netzstruktur bei einer Verbindung der Fahrzeugreifen gemäß Fig. 4, wobei die Reifeninnenräume mittels eingelegter Gewebeschläuche verpreßt sind;
- Fig. 24: eine der Fig. 23 entsprechende Darstellung, bei vollständiger Verpressung über eingelegte Gewebeschläuche;
- Fig. 25: eine der Fig. 7 entsprechende Darstellung, bei Durchsetzung der Fahrzeugreifen mit säulenartigen Betonelementen;
- Fig. 26: den Schnitt gemäß der Linie XXVI-XXVI in Fig. 25;
- Fig. 27: einen Querschnitt durch einen zu verpressenden Gewebeschlauch;
- Fig. 28: im Schnitt einen Fahrzeugreifen mit innenliegendem Plastik- oder Gummischlauch als Auftriebskörper;
- Fig. 29: den Fahrzeugreifen mit innenliegendem Gewebeschlauch für die Verpressung;
- Fig. 30: den Fahrzeugreifen mit Auftriebskörper und Gewebeschlauch;
- Fig. 31: eine schematische Darstellung der Herstellung einer erfindungsgemäßen Netzstruktur auf einem schwimmenden Traggestell;
- Fig. 32: die fertiggestellte Netzstruktur auf dem Wasser schwimmend, gegenüber der Fig. 31 eine alternative Ausführungsform der Netzstruktur betreffend;
- Fig. 33: die auf den Meeresboden abgesenkte Netzstruktur;
- Fig. 34: eine der Fig. 31 entsprechende Darstellung, jedoch eine alternative Ausgestaltung der Netzstruktur und des Traggestells betreffend;
- Fig. 35: eine schematische Schnittdarstellung eines mit der erfindungsgemäßen Netzstruktur erstellten Ringwalls.

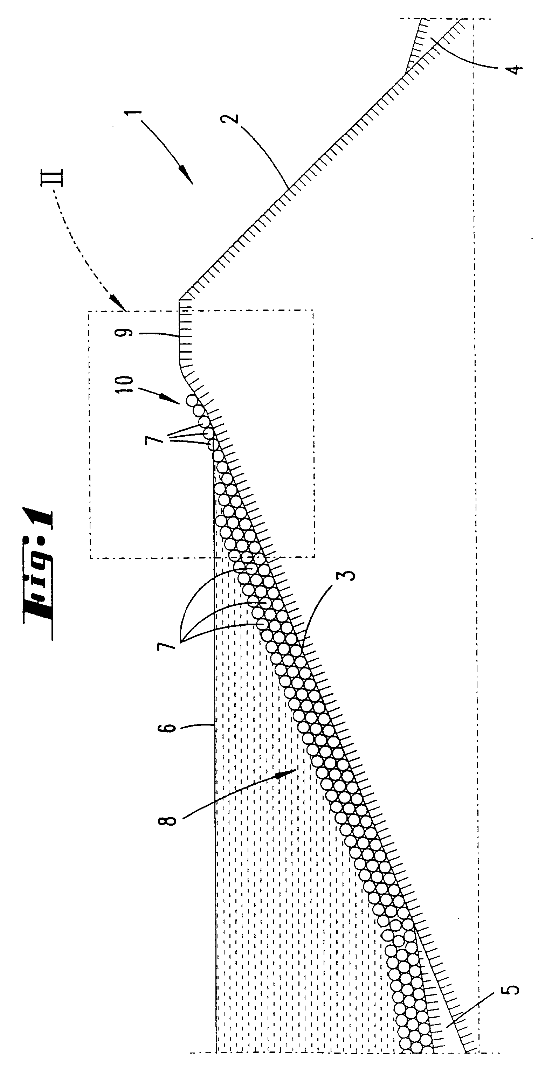

Mit Bezug zu Fig. 1 ist zunächst ein im Querschnitt dargestellter Deich 1, hier ein Seedeich, dargestellt mit einer Binnenböschung 2 und einer Außenböschung 3 sowie ansatzweise einer Binnenberme 4 und einer Außenberme 5. Der maßgebliche Sturmflut-Wasserspiegel ist mit der Bezugsziffer 6 versehen.

Zur Sicherung und Verfestigung des Deiches 1, insbesondere seiner Seeseite, sind auf der Außenböschung 3 in dem gezeigten Ausführungsbeispiel drei Lagen von netzartig miteinander verbundenen und verpreßten Alt-Fahrzeugreifen 7 gelegt. Diese drei Lagen sind wiederum netzartig untereinander verbunden, so daß ein räumliches Gebilde zur Bildung eines Deichschutzes gegeben ist. Weiter erstreckt sich diese räumliche Netzstruktur 8 über die Außenböschung 3 hinaus bis über die Außenberme 5 und gegebenenfalls bis ins Deichvorland.

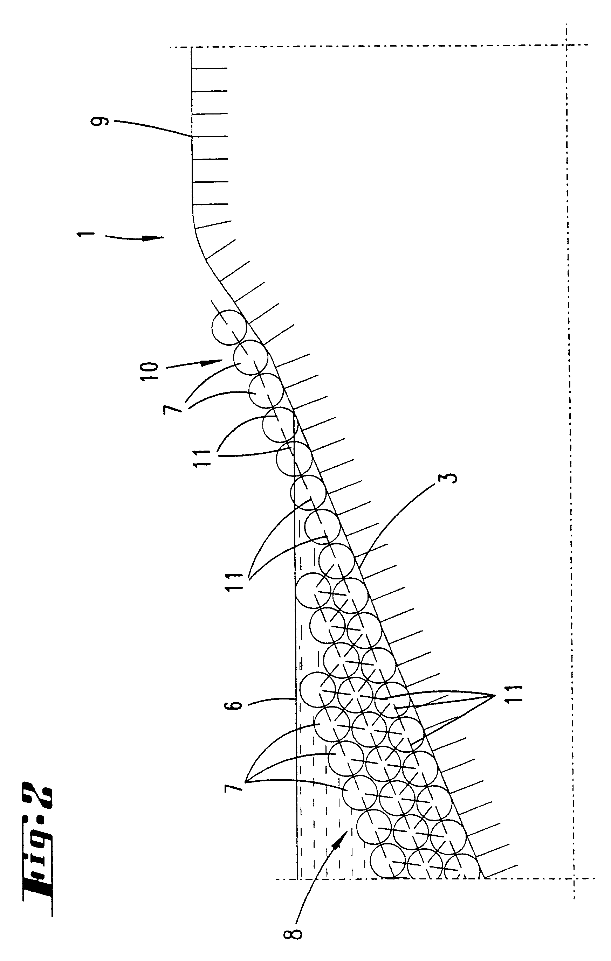

Zur Deichkrone 9 hin läuft die Netzstruktur 8 abgestuft aus, unter Bildung einer einlagigen, flächigen Netzstruktur 10. So ist in den Fig. 1 und 2 eine Reifenanordnung dargestellt, welche zum Teil flächig und zum Teil räumlich ausgebildet ist, erfindungsgemäß demnach eine Situation über und unter Wasser darstellend. Der Übergang von der räumlichen Netzstruktur 8 zur flächigen Netzstruktur 10 erfolgt im Bereich des maßgebenden Sturmflut-Wasserspiegels 6.

Durch die flächige Netzstruktur 10 oberhalb des Wasserspiegels 6 wird ein Oberflächenschutz erzielt, wobei die zu der Netzstruktur 10 zusammengefaßten Fahrzeugreifen 7 zueinander bspw. verbolzt sein können. Im Bereich der räumlichen Netzstruktur 8 sind auch die einzelnen Lagen untereinander in bevorzugt gleicher Weise miteinander verbunden. Ein solches Gebilde versetzt einen laminar verlaufenden Wasserstrom in Turbulenzen, was zur Folge hat, daß z. B. Sand, Schlick usw. nicht weggespült werden können, sondern zufolge der turbulenten Strömung aufgehalten und in das räumliche Reifengebilde eingelagert wird. Es kommt hierbei zu einem gewünschten Eingrabungseffekt in den Untergrund.

Die die Fahrzeugreifen 7 untereinander verbindenden Verbindungselemente 11 sind in der Fig. 2 lediglich schematisch dargestellt. Nachstehend werden verschiedene Ausführungsformen dieser Verbindungen näher beschrieben.

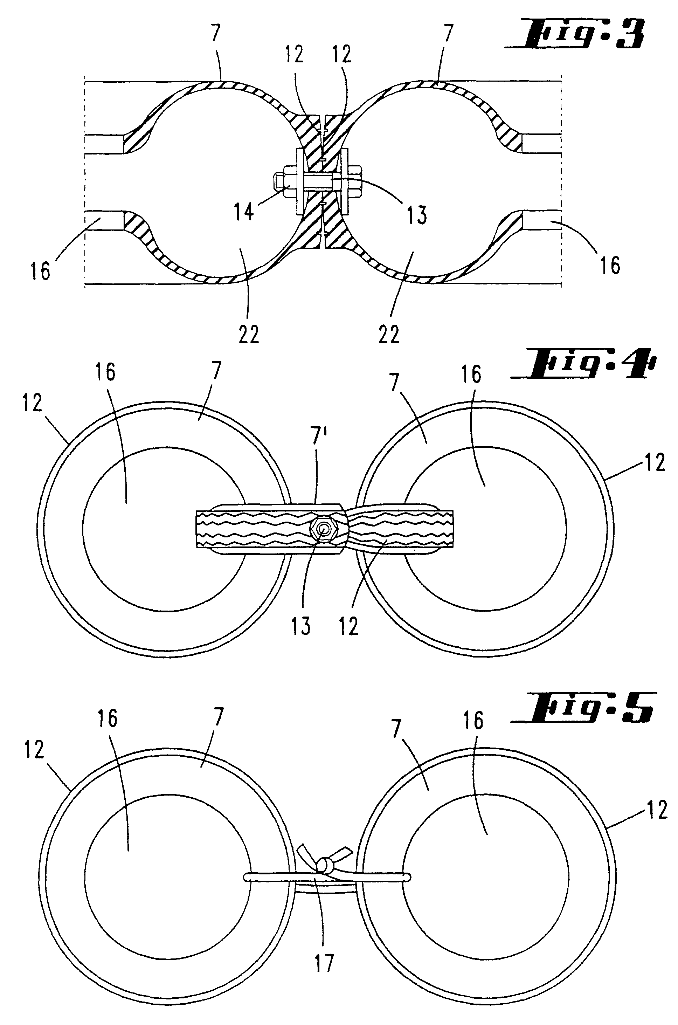

In Fig. 3 sind zwei Fahrzeugreifen 7 unter Durchsetzung ihrer Laufflächen 12 miteinander preß-verbolzt, wozu eine, die Laufflächen 12 durchsetzende Schraube 13 mit einer Schraubenmutter 14 gekontert ist. Hierdurch ist eine im wesentlichen starre Netzstruktur gegeben.

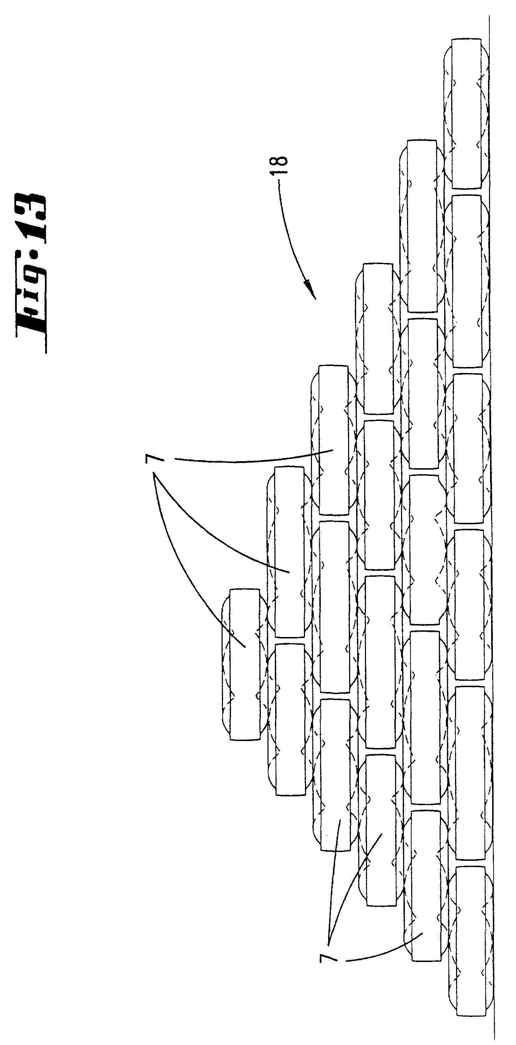

In Fig. 4 ist eine alternative Verbindungsform dargestellt, bei welcher ein Fahrzeugreifen 7' schlingenartig zwei weitere Fahrzeugreifen 7 miteinander verbindet. Hierzu ist der verbindende Fahrzeugreifen 7' aufgetrennt derart, daß dieser einen im wesentlichen radial geführten Trennschnitt 15 aufweist (vergl. Fig. 10). Nach Durchführung des so aufgeschnittenen Reifens 7' durch die Reifenöffnungen 16 der zu verbindenden Reifen 7 sind die beiden freien Enden unter Überlappung im Bereich der Trennstelle wieder miteinander verbunden, wobei hier bevorzugt eine Verbolzung gemäß der bezüglich der zu Fig. 3 beschriebenen Art Anwendung findet (vergl. Fig. 11).

Zufolge dieser Verbindungsausgestaltung werden die Fahrzeugreifen 7 bzw. 7' wie ein Gebilde aus beweglichen Kettengliedern beliebig miteinander verbunden.

Weiter alternativ kann eine bewegliche Verbindung der Fahrzeugreifen miteinander auch vermittels einer Schlinge, wie einer Drahtschlinge 17 gemäß Fig. 5 erfolgen. Diesbezüglich ist auch weiter eine Verbindung durch Ketten-, Draht- oder andere Klammerglieder denkbar.

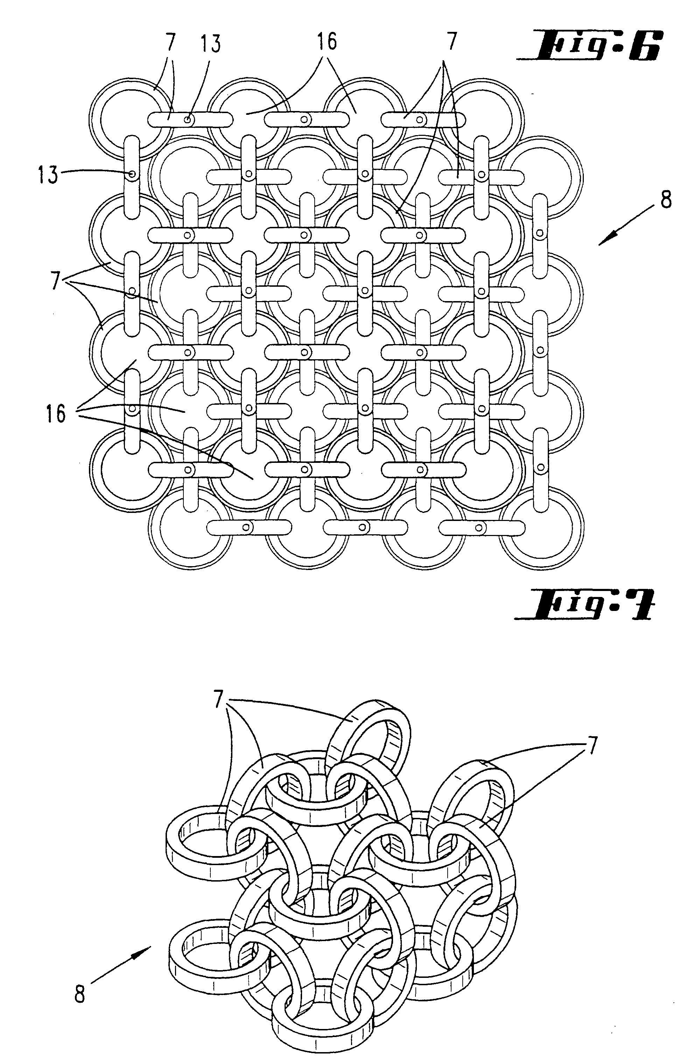

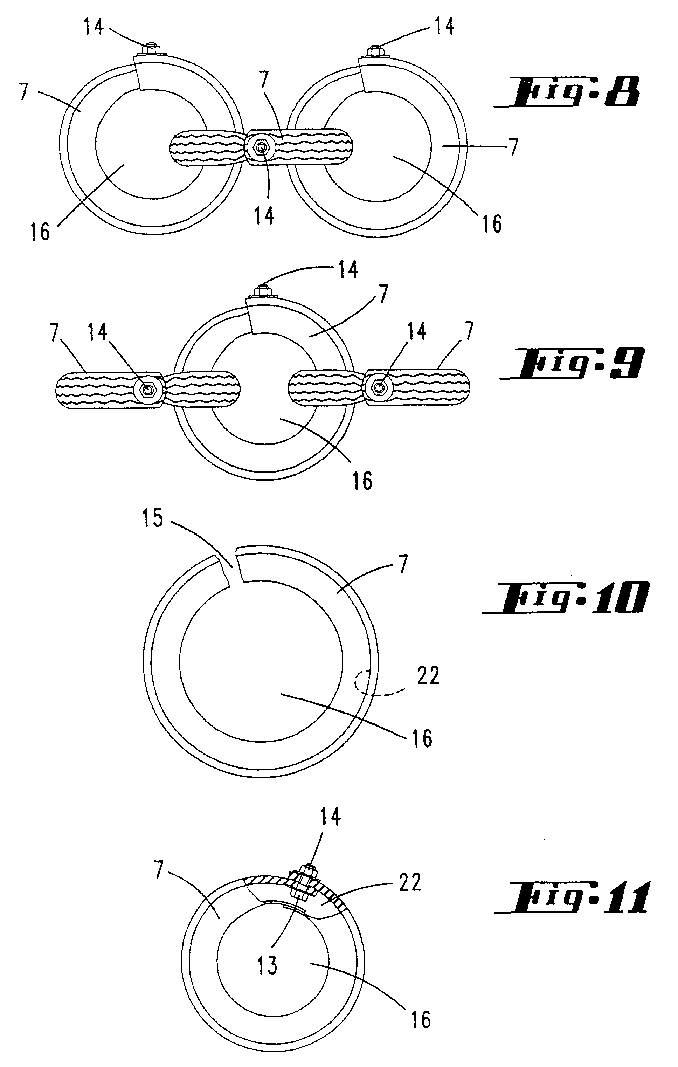

In den Fig. 6 und 7 ist eine räumliche Anordnung von Reifen 7 dargestellt, zur Bildung einer räumlichen Netzstruktur 8. Bevorzugt sind hierbei die einzelnen Reifen 7 mit- und zueinander durch Reifenverbindungen gemäß der bezüglich zu Fig. 4 beschriebenen Weise verbunden. Solche räumlichen Netzstrukturen 8 sind auch durch Verbindungen der Fahrzeugreifen 7 untereinander gemäß den bezüglich zu den Fig. 3 und 5 beschriebenen Verbindungsausbildungen denkbar. Der Vorteil der räumlichen Netzstruktur 8 besteht in dem so erzielten großzügigeren Raumvolumen sowie in dessen besseren Beweglichkeit gegenüber dem Untergrund, also einer verbesserten Anpassungsfähigkeit. In der in den Fig. 6 und 7 dargestellten Weise kann bspw. die in Fig. 1 unterhalb des Wasserspiegels 6 dargestellte, räumliche Netzstruktur 8 gebildet sein.

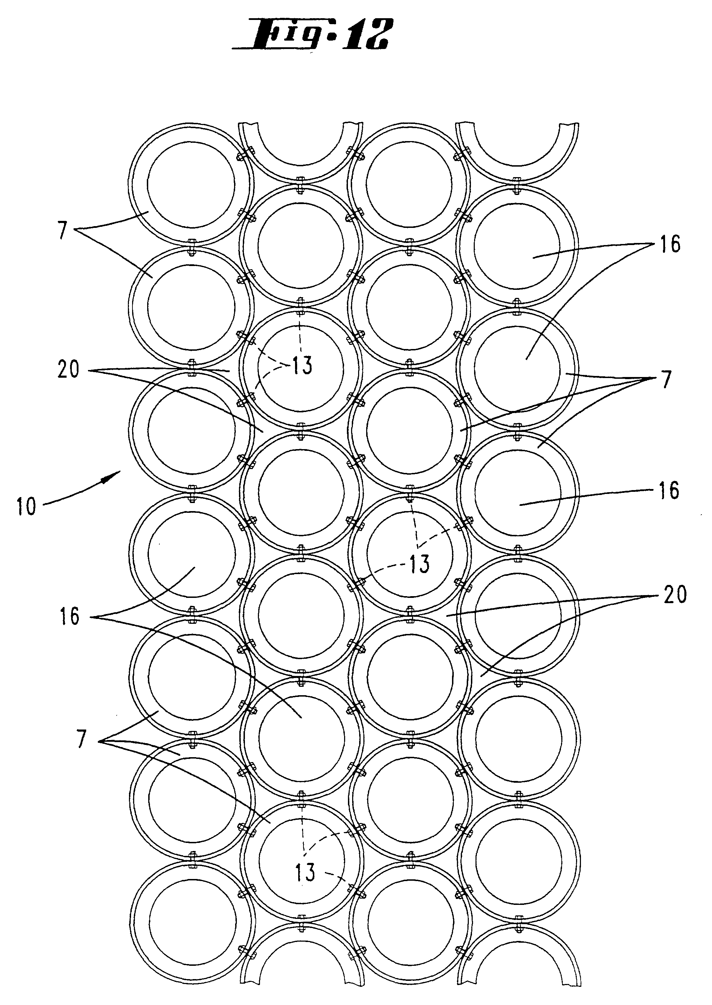

Die Fig. 8 und 9 zeigen in weiterer Ausführungsform eine gliederkettenartige Anordnung von Fahrzeugreifen 7, ähnlich der Anordnung gemäß Fig. 4. Hier sind jedoch alle Fahrzeugreifen 7 aufgetrennt und nach Herstellung der schlingenartigen Verbindung wieder zu einem reifenähnlichen Gebilde verbolzt.

Eine beispielhafte, aus Alt-Fahrzeugreifen 7 hergestellte flächige Netzstruktur 10 ist in der Fig. 12 dargestellt. Hierbei ist jeder Fahrzeugreifen 7 mit mindestens zwei weiteren Fahrzeugreifen 7 verbunden. In dem gezeigten Ausführungsbeispiel sind die Reifen 7 gemäß der in Fig. 3 dargestellten Ausführungsform miteinander verbolzt. Aus dieser Anordnung ergibt sich, insbesondere wenn nach Auflegen dieser Netzstruktur 10 auf eine zu sichernde Bodenfläche mit Beton verpreßt wird, ein starkes, flexibles und begrenzt dehnungsfähiges Flächengebilde.

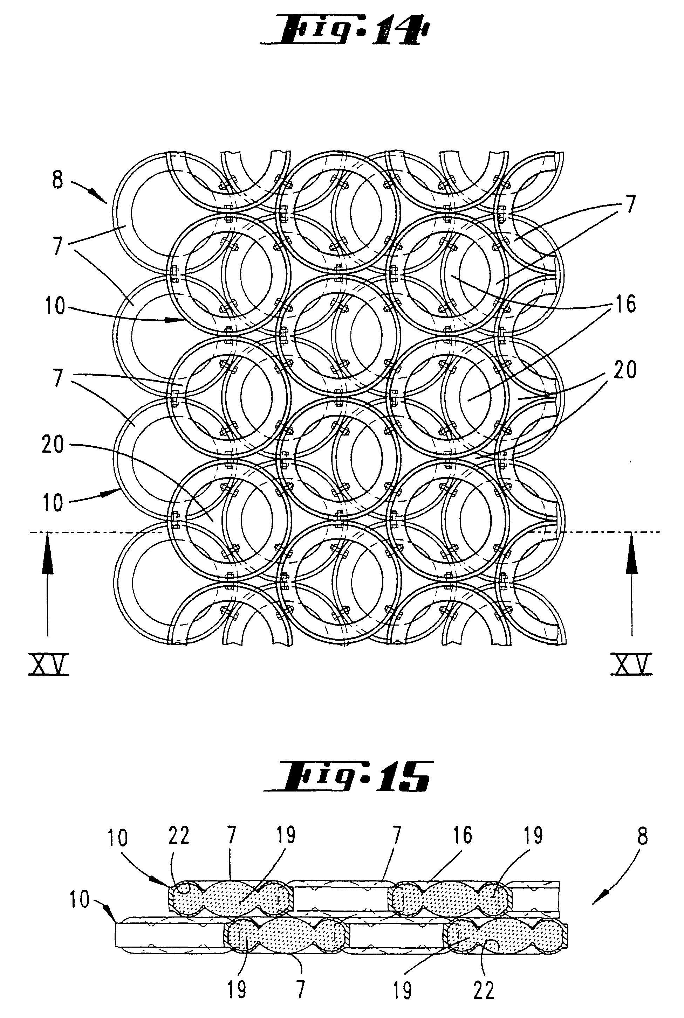

In Fig. 13 ist ein weiterer Anwendungsfall dargestellt. Hier sind Fahrzeugreifen 7 zur Bildung eines Dammkernes 18 übereinander geschichtet. Bevorzugt wird ein solcher Dammkern 18 mit Beton verpreßt. Auf diese Weise wird ein sehr stabiler Dammkern 18 gebildet, welcher zufolge der Gummischichten der Fahrzeugreifen 7 in sich selber genügend flexibel ist, um auftretende Bauwerks- und Untergrundbewegungen mitzuvollziehen bzw. aufzunehmen. Solche Reifendämme eignen sich auch hervorragend dort, wo z. B. in Flachwassergebieten Aufschüttungen für z. B. Inseln für Wohn- und Vegetationszwecke erfolgen sollen. Bei der Errichtung von atollähnlichen Reifenmauern können die äußeren Reifenschichten unverpreßt bleiben, um mit einem geeigneten Substrat für eine Vegetation verfüllt werden zu können.

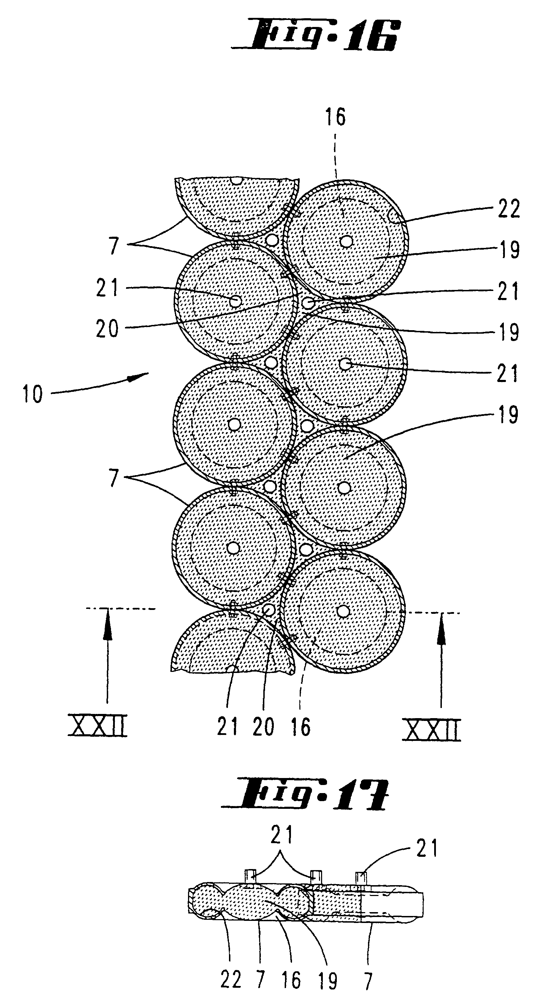

Die Fig. 14 und 15 zeigen eine Ausführungsform, bei welcher zwei Lagen flächiger Netzstrukturen 10 gemäß Fig. 12 übereinander geschichtet sind, wobei die lotrechten Schichten übereinander versetzt gelagert sind. Hierbei liegen die verpreßten Reifenbereiche nicht direkt übereinander, was zur Folge hat, daß auch horizontal zwischen den einzelnen, bevorzugt verpreßten Betonschichten, jeweils eine Gummischicht ausgebildet ist, um hier eine gewünschte Flexibilität noch weiter steigern zu können.

Die beiden übereinander geschichteten Lagen von flächigen Netzstrukturen 10 können in weiterer Ausführungsform auch miteinander durch Bolzen verbunden sein.

In der Draufsicht gemäß Fig. 14 ist die Anordnung noch unverpreßt dargestellt. Wie aus dem Querschnitt gemäß Fig. 15 zu erkennen, füllt eine Verfüllmasse aus Beton 19 in diesem Ausführungsbeispiel den Fahrzeugreifen 7, einschließlich der freien Reifenöffnung 16 aus.

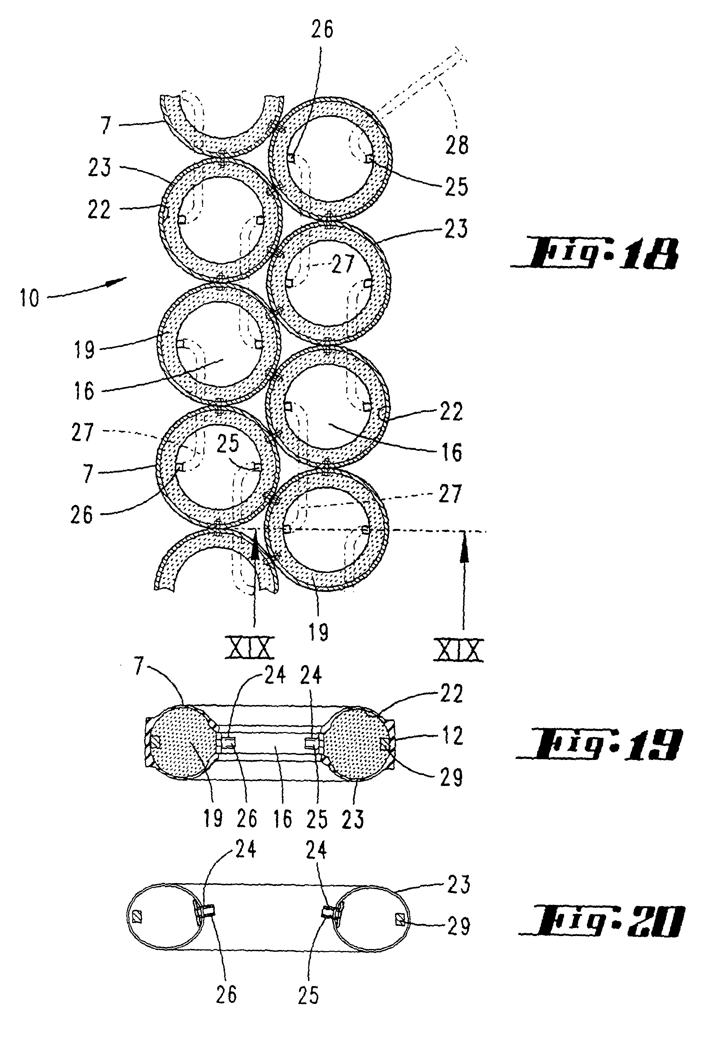

Fig. 16 zeigt eine Anordnung, bei welcher sich jeweils drei Fahrzeugreifen 7 berühren und durch Preß-Verbolzen miteinander verbunden sind, zur Bildung eines in sich starren Netzwerkes. Hierbei sind die Fahrzeugreifen 7 im Inneren vollflächig mit Beton 19 verpreßt. Desweiteren sind auch die zwischen den Fahrzeugreifen 7 entstehenden Zwickel 20 mit Beton 19 verfüllt. Hierzu sind jedem Fahrzeugreifen 7 und jedem Zwickel 20 ein Verfüllnippel 21 zugeordnet, zum Einpressen des Betons 19.

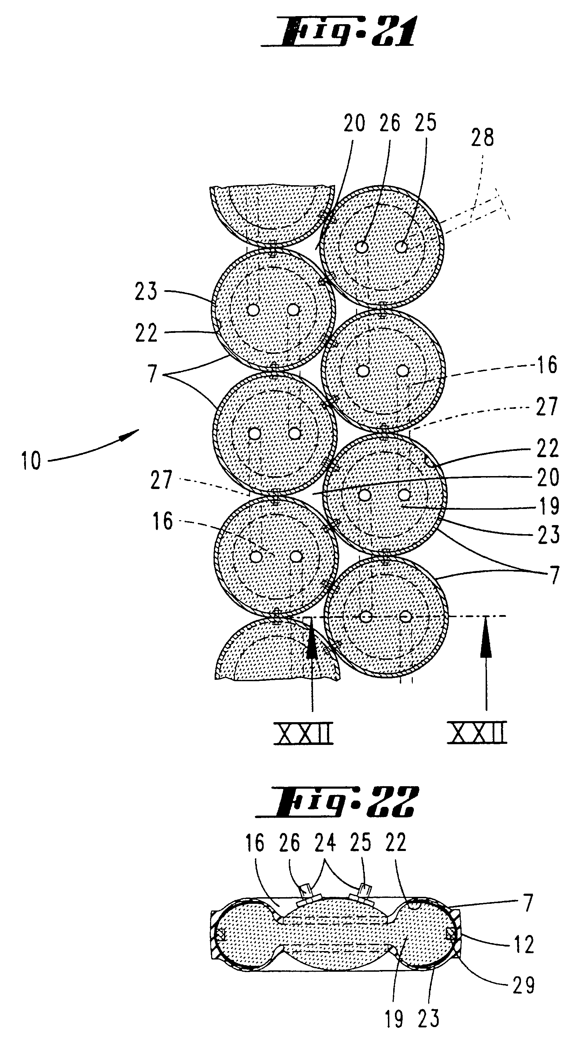

Alternativ kann gemäß den Fig. 18 und 19 ein teilweises Verpressen der Fahrzeugreifen 7 mit Beton 19 erfolgen. Hierbei wird lediglich der Reifeninnenraum 22 ausgefüllt, wobei in diesem ein als Schutzhülle dienender Gewebeschlauch 23 aufgenommen ist. Dieser ringförmige Gewebeschlauch 23 ist mit zwei innenliegenden, jeweils Füllanschlüsse 24 ausbildenden Verpreßnippeln versehen, wobei ein Nippel einen Einlaßanschluß 25 ausbildet zur Zuführung von Verpreßmasse und der andere Nippel einen Auslaßanschluß 26 zur Weiterleitung der Verpreßmasse zu weiteren Gewebeschlauchkörpern darstellt. Hierzu ist in vorteilhafter Weise der Auslaßanschluß 26 eines Fahrzeugreifens 7 über einen Verbindungsschlauch 27 mit dem Einlaßanschluß 25 eines benachbarten Fahrzeugreifens 7 verbunden.

Das Verpressen mit Beton oder auch anderen Verfüllmaterialien geschieht in der Form, daß von einer Betonpumpe aus mehrere Verpreßchläuche zu Verfüllnippeln 21 gemäß der Ausführungsform in Fig. 16 oder ein Verpreßschlauch 28 zu einem Einlaßanschluß 25 eines ersten Gewebeschlauches 23 führt. Von hier aus sind die Gewebeschläuche 23 der anderen Fahrzeugreifen 7 vermittels der Verbindungsschläuche 27 in Reihe geschaltet.

In weiterer Ausführungsform können auch die zwischen den Fahrzeugreifen 7 gebildeten Zwickel durch einen, einen Füllanschluß 24 aufweisenden Gewebeschlauch mit Beton 19 verpreßt werden.

Zur Vorfixierung des Gewebeschlauches 23 in dem Fahrzeugreifen 7 bzw. in dessen Reifeninnenraum 22 besitzt der Gewebeschlauch 23 innenliegend einen Spreizring 29 aus beliebigem Material mit einem Durchmesser etwa gleich dem Innendurchmesser des Fahrzeugreifens 7.

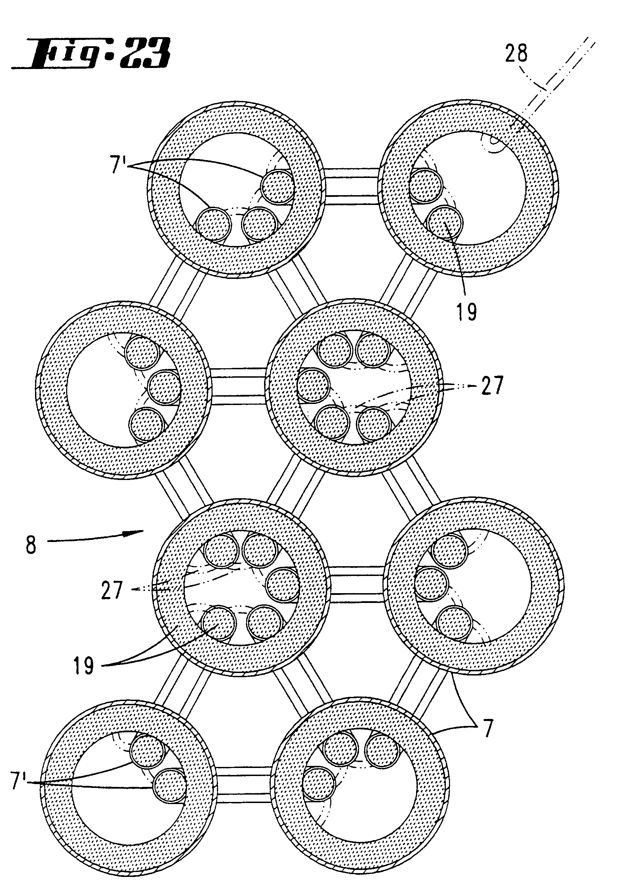

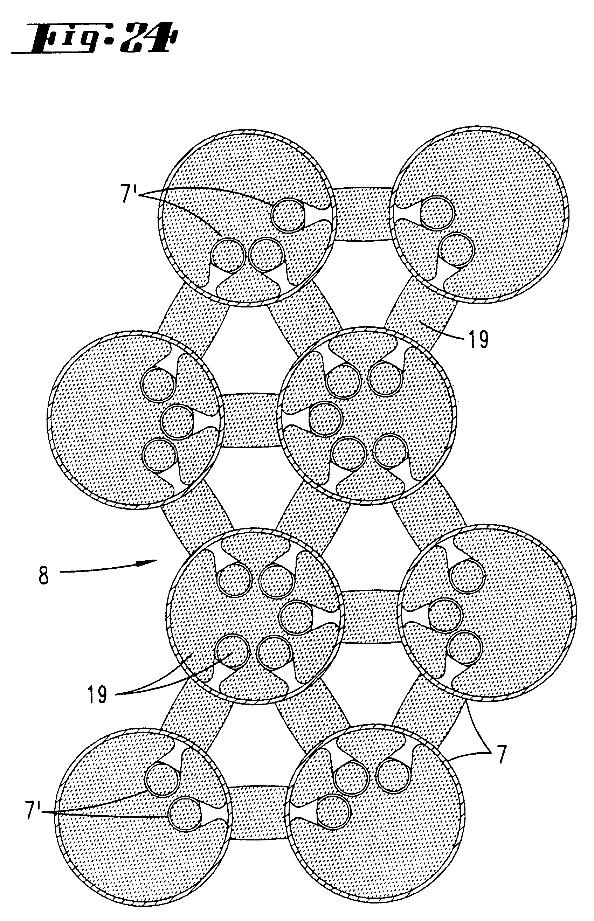

In weiterer alternativer Ausführung ist auch eine vollständige Verpressung der Fahrzeugreifen 7 denkbar. Hierzu ist, wie in den Fig. 21 und 22 dargestellt, ein im wesentlichen runder Gewebeschlauch 23 in dem Fahrzeugreifen 7 durch einen Spreizring 29 gehalten. Dieser Gewebeschlauch 23 besitzt ebenfalls zwei Füllanschlüsse 24. Wird der Gewebeschlauch 23 mit Beton verfüllt, wird in einem Arbeitsgang der gesamte Reifendurchmesser ausgefüllt, was im Bereich der Reifenöffnung 16 ein blasenartiges Ausbeulen des Gewebeschlauches 23 zur Folge hat (vergl. Schnittdarstellung in Fig. 22). Der hier eingesetzte Gewebeschlauch 23 ist im wesentlichen als doppelflächiger, runder Gewebekörper gebildet, im Gegensatz zu dem in Fig. 20 dargestellten ringförmigen Gewebeschlauch 23 zur Verfüllung lediglich des Reifeninnenraums 22.

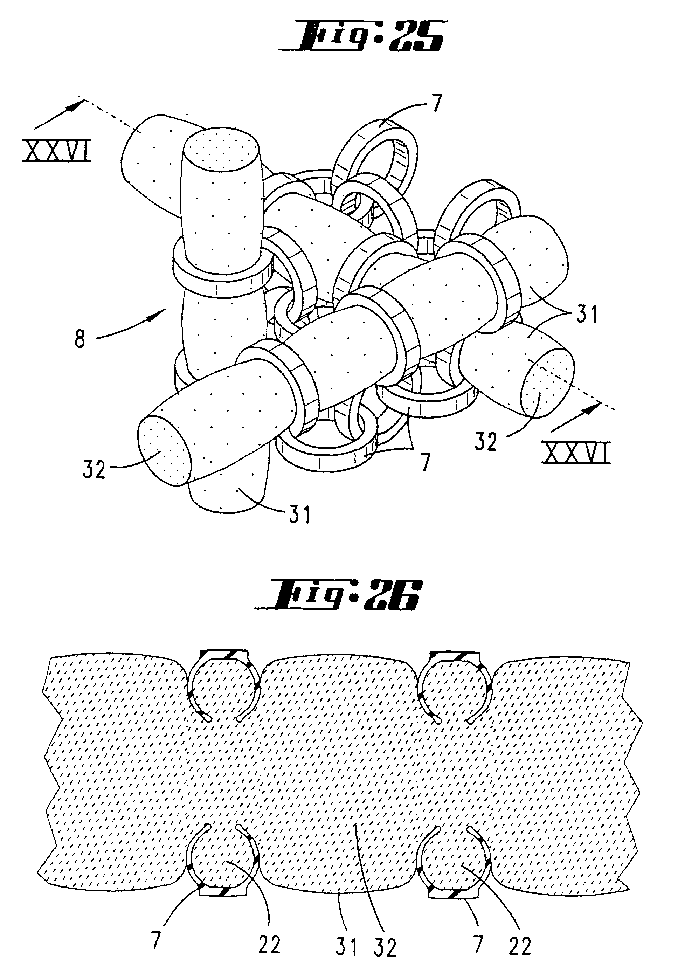

Fig. 23 zeigt eine Anordnung von Fahrzeugreifen 7, welche gemäß dem Ausführungsbeispiel der Fig. 6 und 7 durch einen dritten, aufgeschnittenen Fahrzeugreifen 7' zur Bildung einer räumlichen Netzstruktur 8 miteinander verbunden sind. Entsprechend dem Ausführungsbeispiel in der Fig. 18 sind diese Fahrzeugreifen 7 mit Gewebeschläuchen 23 versehen, welche untereinander mit hier strichpunktiert dargestellten Schläuchen 27 verbunden sind. Auch diese Anordnung wird über einen Verpreßschlauch 28 mit bevorzugt Beton verpreßt, so daß die hiernach ausgefüllten Reifeninnenräume 22 eine Beschwerung der gesamten Netzstruktur 8 bilden.

In der Fig. 24 ist in einer weiteren Ausführungsform eine Anordnung gemäß Fig. 23 gezeigt, wobei hier jedoch Gewebeschläuche 23 eingesetzt sind, welche ein komplettes Ausfüllen der Fahrzeugreifen, d. h. sowohl des Reifeninnenraumes 22 als auch der Reifenöffnung 16 gemäß dem Ausführungsbeispiel in Fig. 21 bewirkt. Darüber hinaus können auch die Zwickel 20 zwischen den Fahrzeugreifen mit weiteren Gewebeschläuchen 23 versehen sein, welche ebenfalls über Verbindungsschläuche 27 mit den in den Fahrzeugreifen 7 einliegenden Gewebeschäuchen 23 zum Verpressen zu verbinden sind.

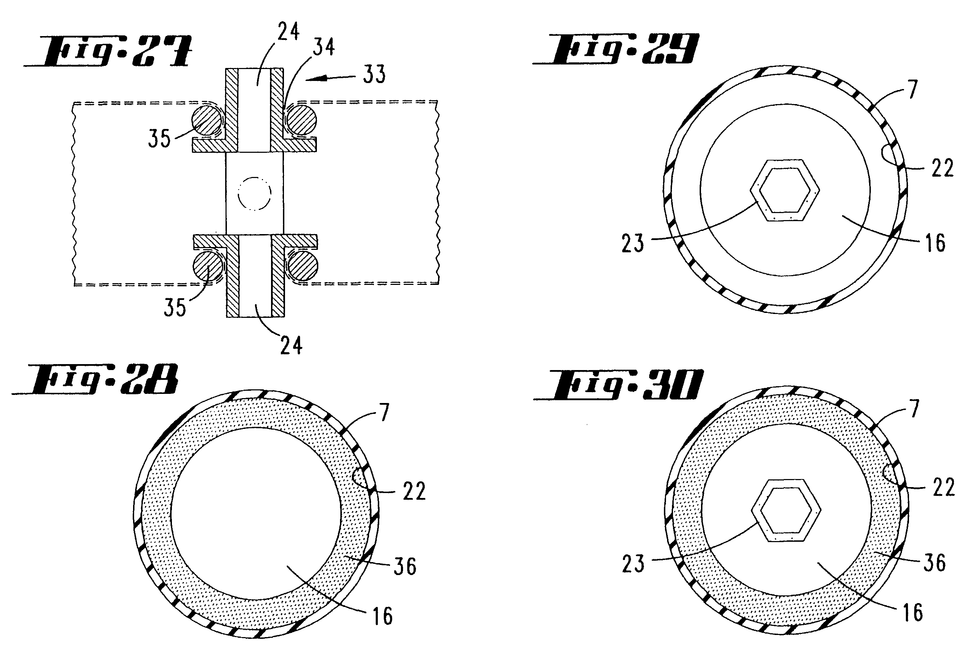

Eine weitere Ausführungsform ist in der Fig. 25 dargestellt. Hier ist eine räumliche Netzstruktur 8 gemäß Fig. 7 durchsetzt von gleichfalls als Schutzhülle 30 dienenden Gewebestrümpfen 31. Die Anordnung ist hierbei so gewählt, daß sich diese Gewebestrümpfe 31 im wesentlichen entlang einer Reifenachse erstrecken. Auch diese Gewebestrümpfe 31 werden über nicht dargestellte Verpreßschläuche 28 mit Beton gefüllt, so daß nach Abschluß der Verpreßarbeiten säulenartige Betonelemente 32 gebildet sind. In der Fig. 25 sind lediglich drei zu Betonelementen 32 verpreßte Gewebestrümpfe 31 dargestellt. In der Praxis werden jedoch eine Vielzahl derartiger Gewebestrümpfe 31 eingelegt, wobei Kreuzungspunkte der Gewebestrümpfe 31 bewußt hingenommen werden. Im Zuge der Verpressung passen sich diese aneinander an.

Die in den Fahrzeugreifen 7 eingelagerten Gewebestrümpfe 31 sind so positionsfunktionell gelagert, daß diese sich im verpreßten Zustand gemäß Fig. 25 so stark aufweiten und einander teilweise derart anlagern, daß eine form-, kraft- und haftschlüssige Anlagerung von insgesamt Fahrzeugreifen 7 und Gewebestrümpfen 31 bzw. Betonelemente 32 entsteht (vergl. Fig. 26). Auf diese Weise wird gemäß den Volumenmaßen einer weiteren Reifenverbundstruktur ein im wesentlichen monolitischer Gesamtkörper erreicht, wobei die innenliegenden Fahrzeugreifen in Art einer flexiblen Bewehrung wirken.

Weiter besteht die Möglichkeit, bei einer Anordnung mit Gewebestrümpfen 31 zusätzlich im Reifeninnenraum 22 zu verpressende Gewebeschläuche 23 einzusetzen.

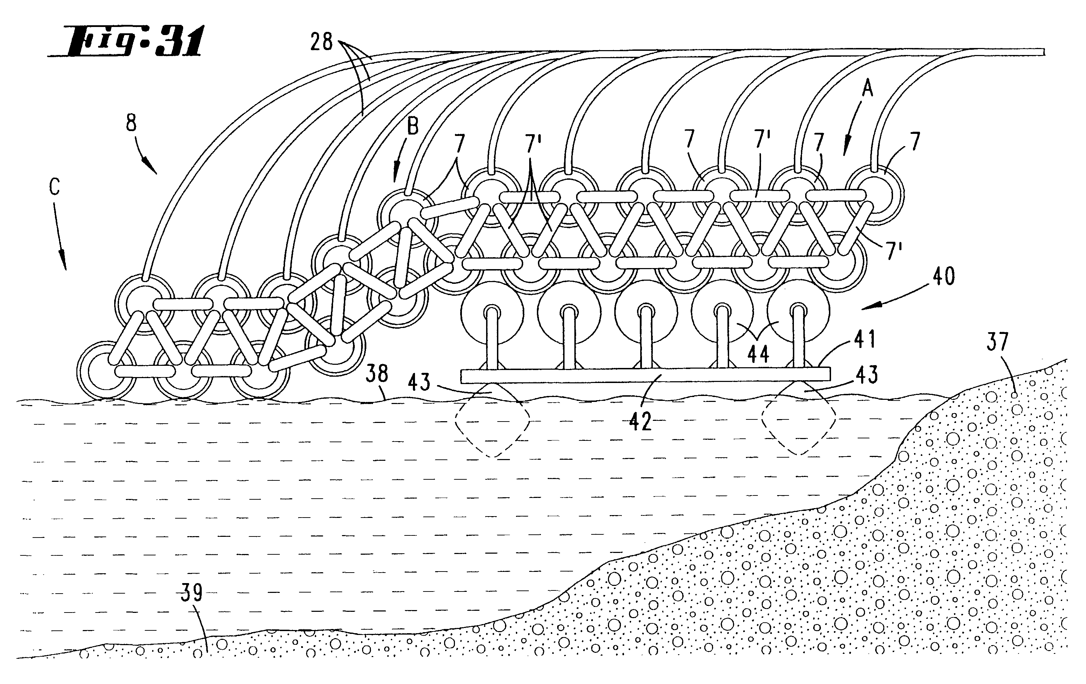

Die Fig. 27 zeigt einen Querschnitt durch einen Gewebeschlauch 23 mit angeordnetem Verbindungsglied 33, welches ober- und unterseitig des Gewebeschlauch 23 Füllanschlüsse 24 ausbildet. Das in diesem Ausführungsbeispiel gezeigte Verbindungsglied 33 kann bspw. zur mittigen Anordnung in einem zur vollständigen Auspressung eines Fahrzeugreifens 7 dienenden Gewebeschlauchs 23 vorgesehen sein.

Im Bereich der von den Füllanschlüssen 24 durchtretenden Öffnungen 34 des Gewebeschlauches 23 ist letzterer über Spannringe 35 an den Füllanschlüssen 24 dichtend gehaltert.

Wie in der Fig. 27 zu erkennen, können auch weitere Füllanschlüsse 24 im Bereich des Verbindungsgliedes 33 vorgesehen sein, so bspw. ein -strichpunktiert dargestellter- seitlicher Füllanschluß 24.

Sowohl das dargestellte Verbindungsglied 33 als auch die Spannringe 35 können auch zum Anschluß an Gummioder Plastikschläuchen dienen, welche im Reifeninnenraum 22 angeordnet als Auftriebskörper dienen können.

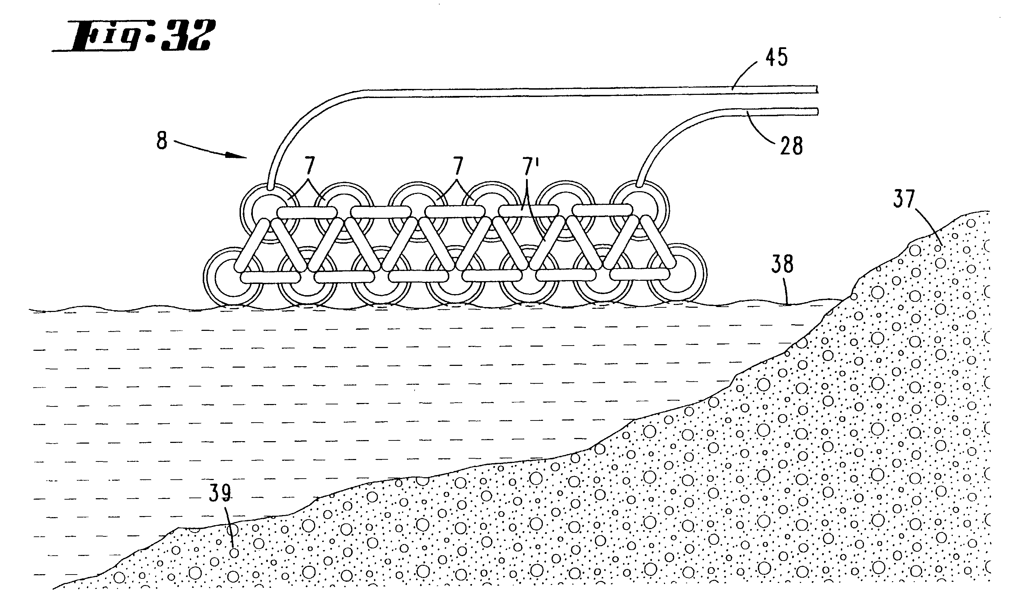

In der Fig. 28 ist eine Schnittdargestellung eines zur Bildung einer erfindungsgemäßen Netzstruktur dienenden Fahrzeugreifens 7 gezeigt, in dessen Reifeninnenraum 22 ein Auftriebskörper 36 in Form eines Plastik- oder Gummischlauches eingelegt ist. Um die gebildete Netzstruktur bei einer Verwendung unter Wasser, bspw. zur Deichbefestigung, zunächst schwimmfähig zu halten, werden die eingelegten Schläuche zunächst mit Luft gefüllt, dienen demgemäß als Auftriebskörper 36. Alternativ können diese Plastik- oder Gummischläuche auch zum Verfüllen mit Beton oder dergleichen dienen.

Der in der Fig. 29 dargestellte Fahrzeugreifen 7 besitzt einen axial angeordneten Gewebeschlauch 23 für Verpreßzwecke, wie sie zuvor bereits beschrieben wurden.

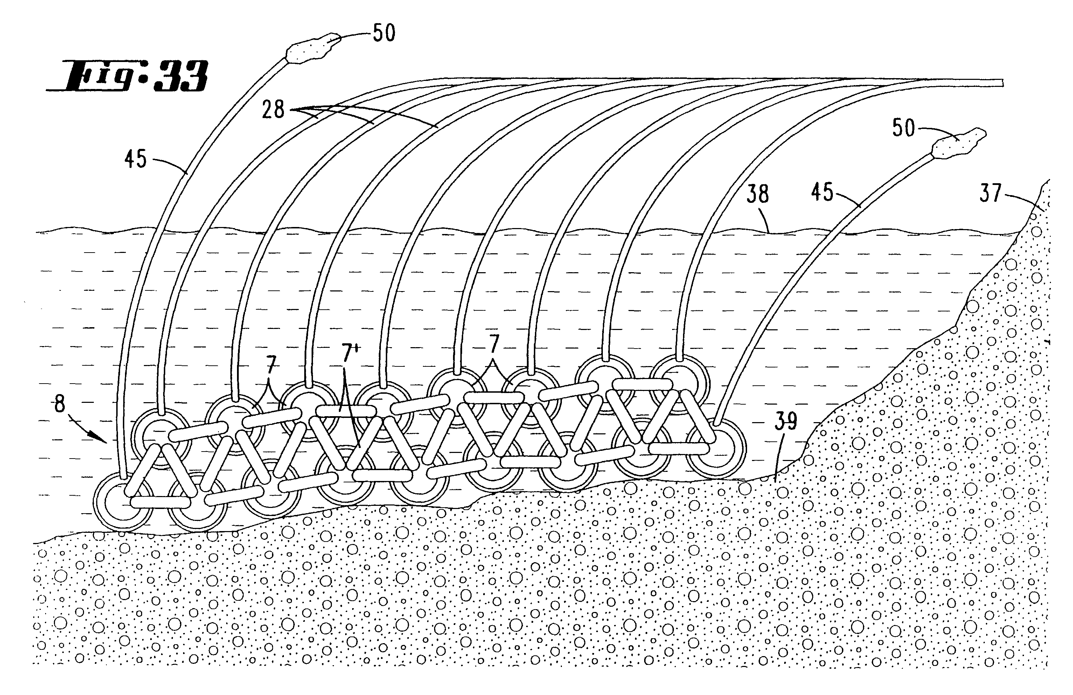

Es kann auch eine Kombination von Gewebeschlauch 23 und Auftriebskörper 36 gemäß Fig. 30 gegeben sein. Sobald aus den Auftriebskörpern 36 das Auftriebsmedium, bevorzugt Luft, abgelassen ist, erfolgt die Verpressung über den Gewebeschlauch 23, womit letzterer auch den zuvor vom Auftriebskörper 36 ausgefüllten Reifeninnenraum 22 verpreßt.

In den Fig. 31 bis 33 sind verschiedene Arbeitssituationen im Zuge der Herstellung einer unter Wasser anzuordnenden Netzstruktur dargestellt.

In Fig. 31 ist der Uferbereich mit der Bezugsziffer 37, die Wasseroberfläche mit 38 und der Seeboden mit 39 beziffert. Im Uferbereich 37 liegen die nicht dargestellten Fahrzeugreifen 7 zur Herstellung der hier räumlichen Netzstruktur 8 bereit. Darüber hinaus ist im Uferbereich 37 auch das Verpreßzubehör, wie bspw. ein Kompressor, vorhanden.

Zur Herstellung der räumlichen Netzstruktur 8 ist eine schwimmende, eine Tragvorrichtung 40 ausbildende Montageplattform 41 vorgesehen. Letztere weist eine Arbeits-Bodenfläche 42 auf, an deren Unterseite Schwimmelemente 43 vorgesehen sind. Hierzu können Pontons oder auch Fässer dienen.

Auf der Arbeits-Bodenfläche 42 sind mit ihren Drehachsen quer zu einer Längserstreckung der Netzstruktur 8 angeordnete Rollelemente 44 vorgesehen. Letztere können gebrauchte stählerne Faßreifen sein, durch welche ein Gerüstrohr als Tragachse gesteckt ist. Alternativ können als Rollelemente 44 auch hier (Alt)-Fahrzeugreifen genutzt werden.

Auf der dem Uferbereich 37 zugewandten Seite der Tragvorrichtung 40 beginnt an der mit A gekennzeichneten Stelle die Montage der einzelnen Fahrzeugreifen 7 zuund miteinander. In dem gezeigten Ausführungsbeispiel ist eine Verbindung der Reifen 7 zueinander durch weitere Fahrzeugreifen 7' vorgesehen. Es ist jedoch auch jede weitere alternative Verbindungsart, wie zuvor beschrieben, denkbar. Die Montage kann hierbei im Uferbereich 37 erfolgen, wonach fertiggestellte Abschnitte über die Tragvorrichtung 40 seewärts abgerollt werden. Es besteht jedoch auch die Möglichkeit, die Netzstruktur 8 direkt auf der Tragvorrichtung 40 herzustellen.

Im Zuge der Fahrzeugreifenmontage werden diese zugleich mit als Auftriebskörper 36 dienenden Schläuchen sowie mit Gewebeschläuchen 23 und/oder Gewebestrümpfen 31 versehen. Sowohl die Auftriebsschläuche als auch die Gewebeschläuche 23 werden über beschriebene Verbindungsschäuche zumindest partiell miteinander verbunden. In dem gezeigten Ausführungsbeispiel werden die Fahrzeugreifen der obersten Lage der dreidimensionalen Netzstruktur 8 mit Verpreßschläuchen 28 versehen, welche im Uferbereich 37 mit dem dort stationierten Kompressor verbunden sind.

Die Netzstruktur 8 wird unter Ablassen eines fertiggestellten Abschnitts (siehe Position B in Fig. 31) auf die Wasseroberfläche 38 abgelassen (siehe C in Fig. 31). Zufolgedessen wirkt die Tragvorrichtung 40 in Art eines Webstuhles. Die jeweils montierten Fahrzeugreifen 7 bleiben auf der Wasseroberfläche 38, wo sie vermittels der beschriebenen, mit Luft gefüllten Auftriebskörper 36 zunächst an der Wasseroberfläche schwimmen.

Wie weiter in Fig. 31 zu erkennen, sind zwei Kontrollschläuche 45 vorgesehen, welche einerends mit der Netzstruktur 8 bzw. mit Gewebeschläuchen 23/Gewebestrümpfen 31 verbunden und anderends mit oberhalb des Wasserspiegels sichtbaren Kontrollstrümpfen 50 versehen sind. Letztere sind bevorzugt aus einem Gewebe gefertigt; weiter bevorzugt aus dem gleichen Material wie die Gewebeschläuche/-strümpfe.

Über diese Kontrollschläuche 45 bzw. Kontrollstrümpfe 50 ist der Zustand im Zuge der Verpressung der Netzstruktur beobachtbar.

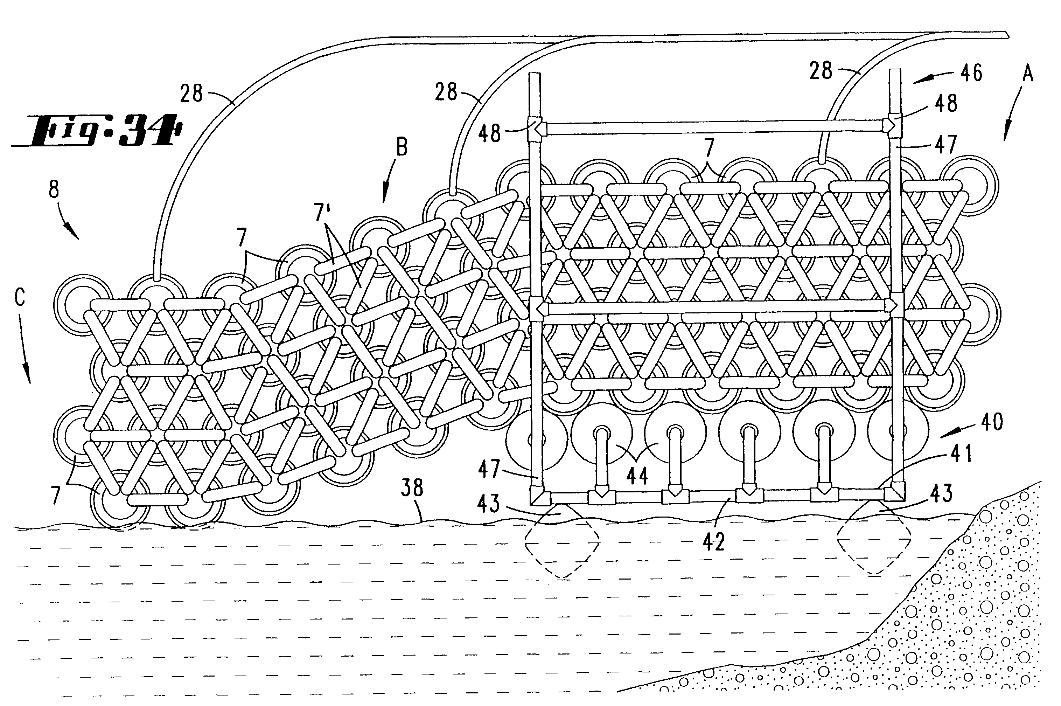

In Fig. 32 ist schematisch eine fertiggestellte, auf der Wasseroberfläche 38 schwimmende Netzstruktur 8 dargestellt. Im Gegensatz zum zuvor beschriebenen Ausführungsbeispiel sind hierbei alle Fahrzeugreifen 7 untereinander leitungsvernetzt, so daß mittels nur eines Verpreßschlauches 28 die gesamte Netzstruktur 8 mit Beton oder dergleichen verpreßt werden kann. Eine weitere Kontroll-Leitung 45 kann hierbei, bei Austreten von eingepreßtem Beton, als Anzeige des vollständigen Verpressens dienen. Alternativ kann dieser Schlauch auch als zusätzlicher Verpreßschlauch dienen.

Die Fig. 33 zeigt die abgesenkte Stellung der Netzstruktur 8 auf den Seeboden 39, wozu die in den Auftriebskörpern 36 vorhandenen Luftpolster bevorzugt ferngesteuert abgebaut sind. Dies geschieht bspw. durch Öffnen eines Ventils oder in einfachster Weise bei einer Ausbildung der Auftriebskörper 36 in Form von Kunststoff- oder Gummischläuchen durch Zerstörung derselben.

Die nunmehr in ihre gewünschte Position gezielt abgesenkte Netzstruktur 8 ist über die angeschlossenen Verpreßschäuche 38 vom Uferbereich 37 aus mit Beton oder dergleichen verpreßbar, wobei die vollvolumige Verpressung auch unter Wasser über die über Wasser befindlichen Kontrollstrümpfe 50 kontrolliert wird. Durch die flexible Ausgestaltung der Netzstruktur kann sich diese den Oberflächengegebenheiten anpassen.

Es können beliebig dicke Betonkörper mittels dieser Technik geschaffen werden, wobei durch die umhüllenden bzw. innenliegenden Fahrzeugreifen 7 eine flexibel wirkende Bewehrung gegeben ist. Durch die gezielte Verpreßtechnik ist es möglich, an jedem gewünschten Ort und in jeder Wassertiefe, wobei gegebenenfalls die Verpressung von einer schwimmenden Montageplattform 41 aus vorgenommen wird, einen einwandfreien und durch bspw. Seewasser nicht verunreinigten Beton herzustellen.

Durch das erfindungsgemäße Verfahren können Unterwasserarbeiten, wie bspw. die Herstellung neuer Riffe oder Inseln, bequem von der Wasseroberfläche oder vom Uferbereich aus ferngesteuert über die Verpreßschläuche 28 erfolgen. Hierzu werden bevorzugt handelsübliche Verpreßnippel und -schäuche verwendet.

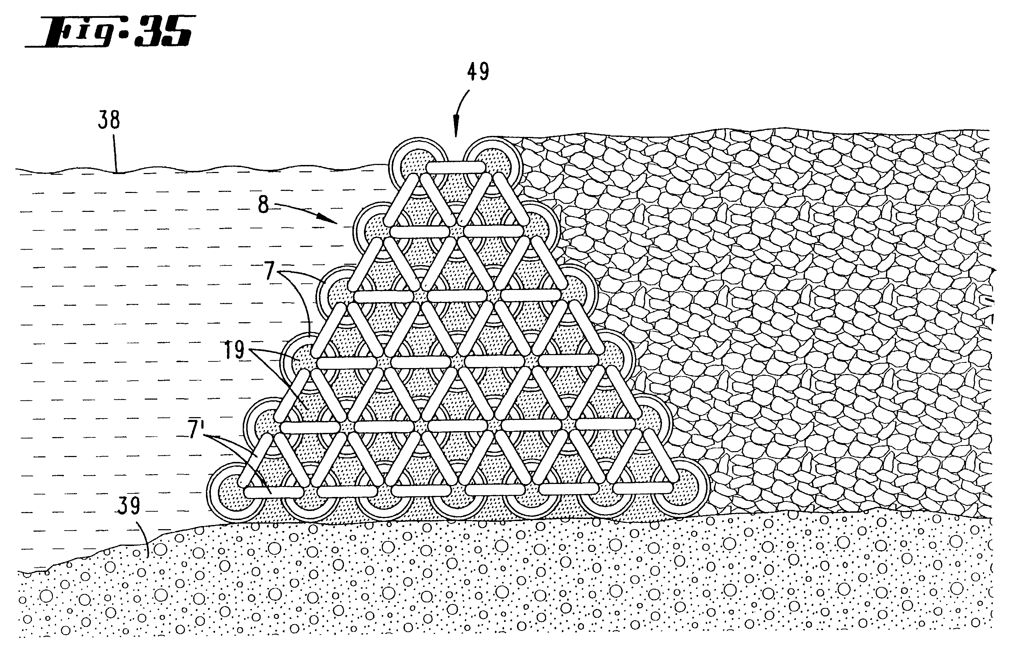

In Fig. 34 ist die Herstellung einer weiteren Ausführungsform einer räumlichen Netzstruktur 8 dargestellt, welche eine größere Höhe aufweist. Hierzu werden vier übereinander angeordnete Lagen von Fahrzeugreifen 7 mit weiteren Reifen zu einer dreidimensionalen, flexiblen Struktur miteinander verbunden. Die Tragvorrichtung 40 ist entsprechend mit einem Gerüst 46 versehen, welches sich aus handelsüblichen Gerüstrohren 47 und Gerüstverbindern 48 zusammensetzt.

Schließlich ist in der Fig. 35 eine fertiggestellte Konstruktion dargestellt. Hierbei sind die Fahrzeugreifen 7 zur Bildung eines Ringwalls 49 im Querschnitt kegelstumpfartig angeordnet. Die Reifeninnenräume 22, die Reifenöffnungen 16 und auch die Zwickel 20 sind mit Gewebeschläuchen 23 versehen und mit Beton verpreßt. Bei einer Anordnung als Ringwall 49 sind diese Netzstrukturen einsetzbar zur Erstellung von künstlich zu errichtenden Inseln in Flachwassergebieten. Darüberhinaus sind solche Ringwälle 49 auch für Warften auf Halligen oder anderen Inseln geeignet sowie für Hafenanlagen. Eine solche abgesenkte Reifenstruktur kann darüber hinaus auch als Ringatoll oder Riff dienen.

Alternativ zur Verfüllung mit Beton ist zur Erzielung einer Vegetation, bspw. unter Wasser, denkbar, Substrate, vermischt mit den entsprechenden Pflanzkeimen oder Samen, einzupressen. Desweiteren können die lichten Zwischenräume innerhalb und außerhalb der Fahrzeugreifen 7 mit Humus oder Mutterboden verfüllt werden, auch dies zur Grundlage für eine Vegetation.

## Patentansprüche

1. Verfahren zur Sicherung, Verfestigung sowie Neugewinnung von Bodenflächen und Untergründen über und unter Wasser, wobei die Sicherung durch bevorzugt netzartig miteinander verbundene (Alt-) Fahrzeugreifen und eine Beschwerung mittels Verfülmasse wie Beton (19) durchgeführt wird, **dadurch gekennzeichnet, dass** die Verfülmasse wie Beton (19) vor Ort in einen Gewebeschlauch (23, 31), der in einem Reifeninnenraum aufgenommen ist, eingepresst wird.

2. Verfahren nach Anspruch 1, **dadurch gekennzeichnet, dass** die Fahrzeugreifen (7) zunächst netzartig miteinander verbunden werden und sodann auf eine zu sichernde Bodenfläche aufgelegt oder eingebracht werden.

3. Verfahren nach einem oder mehreren der vorhergehenden Ansprüche, **dadurch gekennzeichnet, dass** die Fahrzeugreifen (7) nach Auflage auf die Bodenfläche verfüllt werden.

4. Verfahren nach einem oder mehreren der vorhergehenden Ansprüche, **dadurch gekennzeichnet, dass** die Fahrzeugreifen (7) mit Beton (19) verpresst werden.

5. Verfahren nach einem oder mehreren der vorhergehenden Ansprüche, **dadurch gekennzeichnet, dass** die Fahrzeugreifen (7) mit Erde ausgefüllt werden.

6. Verfahren nach einem oder mehreren der vorhergehenden Ansprüche, **dadurch gekennzeichnet, dass** die netzartige Verbindung als räumliche Struktur mehrerer Lagen von Fahrzeugreifen (7) ausgeführt ist.

7. Verfahren nach einem oder mehreren der vorhergehenden Ansprüche, **dadurch gekennzeichnet, dass** die Netzstruktur (8, 10) auf einer schwimmfähigen Tragvorrichtung (40) erstellt wird.

8. Verfahren nach einem oder mehreren der vorhergehenden Ansprüche, **dadurch gekennzeichnet, dass** die Netzstruktur (8, 10) kontinuierlich unter Ablassen eines fertiggestellten Abschnitts auf eine Wasserfläche (38) erstellt wird.

9. Verfahren nach einem oder mehreren der vorhergehenden Ansprüche, **dadurch gekennzeichnet, dass** die Netzstruktur (8, 10) mit Auftriebskörpern (36) ausgerüstet wird.

10. Verfahren nach einem oder mehreren der vorhergehenden Ansprüche, **dadurch gekennzeichnet, dass** das Verpressen mit Beton (19) nach Auflage auf einer Bodenfläche (39) unter Wasser durchgeführt wird.

11. Verfahren nach einem oder mehreren der vorhergehenden Ansprüche, **dadurch gekennzeichnet, dass** im Zuge der Erstellung der Netzstruktur(8, 10) auch eine Verbindung von Verpressschläuchen (28) durchgeführt wird.

12. Verfahren nach einem oder mehreren der vorhergehenden Ansprüche, **dadurch gekennzeichnet, dass** eine vollständige Verpressung über und unter Wasser über einen Kontrollschlauch (45) kontrolliert wird.

13. Deich (1), wie ein Seedeich oder Flussteich, mit einer Außenböschung (3) und einer Innenböschung (2), wobei die Außenböschung (3) und/oder die Innenböschung (2) durch aufliegende, untereinander zu einer Netzstruktur (8, 10) verbundene Fahrzeugreifen (7) gesichert ist, **dadurch gekennzeichnet, dass** in einem Reifeninnenraum in einem Gewebeschlauch (23, 31) verpresste Verfüllmasse wie Beton enthalten ist.

14. Deich nach Anspruch 13, **dadurch gekennzeichnet, dass** die Netzstruktur (8) mehrlagig ist.

15. Deich nach einem oder mehreren der Ansprüche 13 bis 14, **dadurch gekennzeichnet, dass** die Netzstruktur (8, 10) zur Deichkrone (9) hin abgestuft ausläuft.

16. Deich nach einem oder mehreren der Ansprüche 13 bis 15, **dadurch gekennzeichnet, dass** die Netzstruktur (8, 10) über die Böschung (2, 3)hinaus sich bis in das Vorland erstreckt.

17. Netzstruktur (8, 10) von Fahrzeugreifen (7) zur Verwendung in einem Verfahren nach den Ansprüchen 1 bis 12 oder zur Ausbildung eines Deiches (1) nach den Ansprüchen 13 bis 16, **dadurch gekennzeichnet, dass** die Netzstruktur (8, 10) mittels in einer als Gewebeschlauch (22, 31) ausgebildeten, in einem Innenraum sich befindlichen, Schutzhülle (30) verpressten Verfüllmasse wie Beton (19) beschwert ist.

18. Netzstruktur nach Anspruch 17, **dadurch gekennzeichnet, dass** die Schutzhülle (30) wasserundurchlässig ist.

19. Netzstruktur nach einem oder mehreren der Ansprüche 17 bis 18, **dadurch gekennzeichnet, dass** das in der Schutzhülle (30) verpresste Betonelement (32) den Fahrzeugreifen (7) in Achsrichtung durchsetzt.

20. Netzstruktur nach einem oder mehreren der Ansprüche 17 bis 19, **dadurch gekennzeichnet, dass** die Betonelemente (32) durch Verpressen in einem kraft- und/oder formschlüssigen Verbund mit den Fahrzeugreifen (7) sind.

21. Netzstruktur nach einem oder mehreren der Ansprüche 17 bis 20, **dadurch gekennzeichnet, dass** zwei Fahrzeugreifen (7) unter Duchsetzung der Laufflächen (12) miteinader verbolzt sind.

22. Netzstruktur nach einem oder mehreren der Ansprüche 17 bis 21, **dadurch gekennzeichnet, dass** zwei Fahrzeugreifen (7) mittels einer Schlinge, wie einer Drahtschlinge (17), miteinander verbunden sind.

23. Netzstruktur nach einem oder mehreren der Ansprüche 17 bis 22, **dadurch gekennzeichnet, dass** ein Fahrzeugreifen (7') schlingenartig zwei weitere Fahrzeugreifen (7) miteinander verbindet.

24. Netzstruktur nach einem oder mehreren der Ansprüche 17 bis 23, **dadurch gekennzeichnet, dass** der verbindende Fahrzeugreifen (7') oder die verbundenen Fahrzeugreifen (7) aufgetrennt und wieder miteinander verbunden sind.

25. Netzstruktur nach einem oder mehreren der Ansprüche 17 bis 24, **dadurch gekennzeichnet, dass** die aufgetrennten Fahrzeugreifen (7) einen im Wesentlichen radial geführten Trennschnitt (15) aufweisen und unter Überlappung an der Trennstelle wieder miteinander verbunden sind.

26. Netzstruktur nach einem oder mehreren der Ansprüche 17 bis 25, **dadurch gekennzeichnet, dass** ein Fahrzeugreifen (7) mit mindestens zwei weiteren Fahrzeugreifen (7) verbunden ist.

27. Netzstruktur nach einem oder mehreren der Ansprüche 17 bis 26, **dadurch gekennzeichnet, dass** der Beton (19) den Fahrzeugreifen (7) vollständig, einschließlich der freien Reifenöffnung (16) ausfüllt.

28. Netzstruktur nach einem oder mehreren der Ansprüche 17 bis 27, **dadurch gekennzeichnet, dass** in dem Fahrzeugreifen (7) ein, den gesamten Reifendurchmesser ausfüllender, mit Beton (19) verpresster Gewebeschlauch (23) aufgenommen ist.

29. Netzstruktur nach einem oder mehreren der Ansprüche 17 bis 28, **dadurch gekennzeichnet, dass** ein Gewebeschlauch (23) einen Füllanschluß (24) aufweist.

30. Netzstruktur nach einem oder mehreren der Ansprüche 17 bis 29, **dadurch gekennzeichnet, dass** ein Gewebeschlauch (23) zwei Füllanschlüsse (24) als Ein- und Auslassanschlüsse (25, 26) aufweist.

31. Netzstruktur nach einem oder mehreren der Ansprüche 17 bis 30, **dadurch gekennzeichnet, dass** an einem Füllanschluss (24) ein Kontrollschlauch (45) angeschlossen ist.

32. Netzstruktur nach einem oder mehreren der Ansprüche 17 bis 31, **dadurch gekennzeichnet, dass** an dem Kontrollschlauch (45) ein mit Beton (19) verpresster Kontrollstrumpf (50) angeordnet ist.

33. Netzstruktur nach einem oder mehreren der Ansprüche 17 bis 32, **dadurch gekennzeichnet, dass** bei einem flächigen Aneinanderlegen von Fahrzeugreifen (7) entstehende Zwickel (20) mit Beton (19) verfüllt sind.

34. Netzstruktur nach einem oder mehreren der Ansprüche 17 bis 33, **dadurch gekennzeichnet, dass** die Zwickel (20) durch einen, einen Füllanschluss (24) aufweisenden Gewebeschlauch (23) mit Beton (19) verpresst werden.

35. Netzstruktur nach einem oder mehreren der Ansprüche 17 bis 34, **dadurch gekennzeichnet, dass** in dem Gewebeschlauch (23) ein Spreizring (29) angeordnet ist.

36. Netzstruktur nach einem oder mehreren der Ansprüche 17 bis 35, **dadurch gekennzeichnet, dass** die Verfüllmasse ein Substrat ist, vermischt mit Pflanzenkeimen und/oder Pflanzensamen.

## Claims

1. Method for securing, stabilising and reclaiming areas of land and subsoils above and below water, securing being carried out by means of (old) vehicle tyres interconnected preferably in a net-like manner and weighting being accomplished by means of a filling mass such as concrete (19), **characterised in that** the filling mass such as concrete (19) is injected on the spot into a fabric hose (23, 31) which is accommodated in a tyre inner space.

2. Method according to Claim 1, **characterised in that** the vehicle tyres (7), in the first place, are connected to one another in a net-like manner and are then laid onto or introduced to an area of land to be secured.

3. Method according to one or more of the preceding claims, **characterised in that** the vehicle tyres (7) are filled after they have been laid onto the area of land.

4. Method according to one or more of the preceding claims, **characterised in that** the vehicle tyres (7) are injected with concrete (19).

5. Method according to one or more of the preceding claims, **characterised in that** the vehicle tyres (7) are filled with earth.

6. Method according to one or more of the preceding claims, **characterised in that** the net-like connection is provided as a spatial structure of a plurality of layers of vehicle tyres (7).

7. Method according to one or more of the preceding claims, **characterised in that** the net structure (8, 10) is constructed on a floatable carrying device (40).

8. Method according to one or more of the preceding claims, **characterised in that** the net structure (8,10) is constructed continuously, with a finished section being lowered onto a water surface (38).

9. Method according to one or more of the preceding claims, **characterised in that** the net structure (8, 10) is equipped with buoyancy bodies (36).

10. Method according to one or more of the preceding claims, **characterised in that** the injecting with concrete (19) is carried out under water after laying on an area of land (39).

11. Method according to one or more of the preceding claims, **characterised in that** a connection of injection hoses (28) is also carried out while the net structure (8, 10) is being constructed.

12. Method according to one or more of the preceding claims, **characterised in that** a completion of injecting above and below water is monitored by way of a monitoring hose (45).

13. Dyke (1), such as a sea dyke or a river dyke, with an outer slope (3) and an inner slope (2), the outer slope (3) and/or the inner slope (2) being secured by vehicle tyres (7) which lie thereon and are connected to one another to form a net structure (8, 10), **characterised in that** a filling mass such as concrete injected in a fabric hose (23, 31) is contained in a vehicle tyre inner space.

14. Dyke according to Claim 13, **characterised in that** the net structure (8) is multi-layered.

15. Dyke according to one or more of Claims 13 to 14, **characterised in that** the net structure (8, 10) tapers in a stepped manner towards the dyke top (9).

16. Dyke according to one or more of Claims 13 to 15, **characterised in that** the net structure (8, 10) extends over and beyond the slope (2, 3) into the land in front.

17. Net structure (8, 10) of vehicle tyres (7) for use in a method according to Claims 1 to 12 or for forming a dyke (1) according to Claims 13 to 16, **characterised in that** the net structure (8, 10) is weighted by means of a filling mass such as concrete (19) injected in a protective sheath (30) formed as fabric hose (22, 31) and located in an inner space.

18. Net structure according to Claim 17, **characterised in that** the protective sheath (30) is water-impermeable.

19. Net structure according to one or more of Claims 17 to 18, **characterised in that** the concrete element (32) injected in the protective sheath (30) passes through the vehicle tyre (7) in the axial direction.

20. Net structure according to one or more of Claims 17 to 19, **characterised in that** the concrete elements (32) are in a non-positive and/or positive bond with the vehicle tyres (7) by injection.

21. Net structure according to one or more of Claims 17 to 20, **characterised in that** two vehicle tyres (7) are bolted to one another by penetration through the treads (12).

22. Net structure according to one or more of Claims 17 to 21, **characterised in that** two vehicle tyres (7) are connected to one another by means of a loop, such as a wire loop (17).

23. Net structure according to one or more of Claims 17 to 22, **characterised in that** one vehicle tyre (7') connects two further vehicle tyres (7) to one another in a loop-like manner.

24. Net structure according to one or more of Claims 17 to 23, **characterised in that** the connecting vehicle tyre (7') or the connected vehicle tyres (7) are severed and are reconnected to one another.

25. Net structure according to one or more of Claims 17 to 24, **characterised in that** the severed vehicle tyres (7) have a substantially radially directed severing cut (15) and are reconnected to one another so as to overlap at the severing point.

26. Net structure according to one or more of Claims 17 to 25, **characterised in that** one vehicle tyre (7) is connected to at least two further vehicle tyres (7).

27. Net structure according to one or more of Claims 17 to 26, **characterised in that** the concrete (19) fills the vehicle tyre (7) completely, including the free tyre opening (16).

28. Net structure according to one or more of Claims 17 to 27, **characterised in that** a fabric hose (23) injected with concrete (19) is accommodated in the vehicle tyre (7), the hose filling the entire tyre diameter.

29. Net structure according to one or more of Claims 17 to 28, **characterised in that** a fabric hose (23) has a filling connection (24).

30. Net structure according to one or more of Claims 17 to 29, **characterised in that** a fabric hose (23) has two filling connections (24) as inlet and outlet connections (25, 26).

31. Net structure according to one or more of Claims 17 to 30, **characterised in that** a monitoring hose (45) is attached to a filling connection (24).

32. Net structure according to one or more of Claims 17 to 31, **characterised in that** a monitoring sock (50) injected with concrete (19) is provided on the monitoring hose (45).

33. Net structure according to one or more of Claims 17 to 32, **characterised in that** interstice regions (20) arising when vehicle tyres (7) laid against one another flat are filled with concrete (19).

34. Net structure according to one or more of Claims 17 to 33, **characterised in that** the interstice regions (20) are injected with concrete through a fabric hose (23) having a filling connection (24).

35. Net structure according to one or more of Claims 17 to 34, **characterised in that** a spreading ring (29) is provided in the fabric hose (23).

36. Net structure according to one or more of Claims 17 to 35, **characterised in that** the filling mass is a substrate intermixed with plant germs and/or plant seeds.

## Revendications

1. Procédé permettant de renforcer, consolider ainsi que gagner des surfaces et des sous-sols au-dessus et au-dessous de l'eau, le renforcement s'effectue de préférence avec des pneus (usagés) de véhicule, reliés les uns aux autres selon une structure réticulée, et avec une charge constituée par une masse de remplissage telle que du béton (19), **caractérisé en ce que** la masse de remplissage telle que du béton (19) est enfoncée sur place dans une gaine en tissu (23,31), logée à l'intérieur d'un pneu.

2. Procédé selon la revendication 1, **caractérisé en ce que** les pneus de véhicule (7) sont, dans un premier temps, assemblés selon une structure réticulée puis sont posés sur ou mis dans une surface devant être renforcée.

3. Procédé selon une ou plusieurs des revendications précédentes, **caractérisé en ce que** les pneus de véhicule (7) sont remplis après avoir été posés sur la surface.

4. Procédé selon une ou plusieurs des revendications précédentes, **caractérisé en ce que** les pneus de véhicule (7) sont comprimés avec du béton (19)

5. Procédé selon une ou plusieurs des revendications précédentes, **caractérisé en ce que** les pneus de véhicule (7) sont remplis de terre.

6. Procédé selon une ou plusieurs des revendications précédentes, **caractérisé en ce que** l'assemblage réticulaire est construit comme une structure solide, composée de plusieurs couches de pneus de véhicule (7).

7. Procédé selon une ou plusieurs des revendications précédentes, **caractérisé en ce que** la structure réticulée (8, 10) est érigée sur un support (40) flottant.

8. Procédé selon une ou plusieurs des revendications précédentes, **caractérisé en ce que** la structure réticulée (8, 10) laisse descendre un segment fini et par conséquent se situe en permanence sur une surface d'eau (38).

9. Procédé selon une ou plusieurs des revendications précédentes, **caractérisé en ce que** la structure réticulée (8, 10) est équipée de flotteurs (36).

10. Procédé selon une ou plusieurs des revendications précédentes, **caractérisé en ce que** la compression par le béton (19) a lieu sous l'eau, après avoir posé la structure sur une surface (39).

11. Procédé selon une ou plusieurs des revendications précédentes, **caractérisé en ce que** un assemblage de tuyaux de compression (28) est également mis en place immédiatement après l'élaboration de la structure réticulée (8,10).

12. Procédé selon une ou plusieurs des revendications précédentes, **caractérisé en ce que** un tuyau de contrôle (45) permet de vérifier la compression complète au-dessus et au-dessous de l'eau.

13. Digue (1), telle qu'une digue de mer ou une pièce d'eau avec un adossement extérieur (3) et un adossement intérieur (2), les adossements extérieurs (3) et/ou intérieur (2) sont stabilisés par des pneus de véhicule (7) en saillie, assemblés selon une structure réticulée(8,10), **caractérisée en ce que** une masse de remplissage telle que du béton est injectée sous pression dans une gaine en tissu (23, 31) située à l'intérieur du pneu.

14. Digue selon la revendication 13, caractérisée ce que la structure réticulée (8) comporte plusieurs couches.

15. Digue selon une ou plusieurs des revendications 13 à 14, **caractérisée en ce que** la structure réticulée (8, 10) se répand graduellement jusqu'au couronnement de la digue (9).

16. Digue selon une ou plusieurs des revendications 13 à 15, **caractérisée en ce que** la structure réticulée (8, 10) dépasse les adossements (2, 3) pour s'étendre jusqu'au franc-bord.

17. Structure réticulée (8, 10) composée de pneus de véhicule (7) pouvant être utilisée pour un procédé selon les revendications 1 à 12 ou pour constituer une digue (1) selon les revendications 13 à 16, **caractérisée en ce que** la structure réticulée (8, 10) est alourdie par une masse de remplissage telle que du béton (19), injectée sous pression dans une enveloppe protectrice (30), laquelle est conçue comme une gaine en tissu (22, 31) et est située à l'intérieur d'un pneu.

18. Structure réticulée selon la revendication 17, **caractérisée en ce que** l'enveloppe protectrice (30) est imperméable.

19. Structure réticulée selon une ou plusieurs des revendications 17 à 18, **caractérisée en ce que** l'élément en béton (32) injecté sous pression dans l'enveloppe protectrice (30) oriente le pneu de véhicule (7) dans l'axe.

20. Structure réticulée selon une ou plusieurs des revendications 17 à 19, **caractérisée en ce que** la compression des éléments en béton (32) lie ces derniers par force ou par blocage aux pneus de véhicule (7).

21. Structure réticulée selon une ou plusieurs des revendications 17 à 20, **caractérisée en ce que** deux pneus de véhicule (7) sont fixés ensemble par des boulons, au niveau de leur surface de roulement (12),

22. Structure réticulée selon une ou plusieurs des revendications 17 à 21, **caractérisée en ce que** deux pneus de véhicule (7) sont reliés entre eux par une boucle, telle qu'une boucle en fil métallique (17).

23. Structure réticulée selon une ou plusieurs des revendications 17 à 22, **caractérisée en ce que** un pneu de véhicule (7') relie, à la manière d'une boucle, deux autres pneus (7) entre eux.

24. Structure réticulée selon une ou plusieurs des revendications 17 à 23, **caractérisée en ce que** le pneu de connexion (7') ou les pneus reliés (7) sont séparés puis de nouveau reliés entre eux.

25. Structure réticulée selon une ou plusieurs des revendications 17 à 24, **caractérisée en ce que** les pneus de véhicule (7) séparés présentent une coupure (15) essentiellement radiale et sont de nouveau reliés entre eux en se chevauchant au point de sectionnement.

26. Structure réticulée selon une ou plusieurs des revendications 17 à 25, **caractérisée en ce que** un pneu de véhicule (7) est relié au minimum à deux autres pneus (7).

27. Structure réticulée selon une ou plusieurs des revendications 17 à 26, **caractérisée en ce que** le béton (19) remplit entièrement le pneu de véhicule (7), y compris son ouverture libre (16).

28. Structure réticulée selon une ou plusieurs des revendications 17 à 27, **caractérisée en ce que** une gaine en tissu (23), dans laquelle du béton (19) est injecté sous pression et remplissant la totalité du diamètre du pneu, est logée dans le pneu (7).

29. Structure réticulée selon une ou plusieurs des revendications 17 à 28, **caractérisée en ce que** une gaine en tissu (23) présente un raccordement de remplissage (24).

30. Structure réticulée selon une ou plusieurs des revendications 17 à 29, **caractérisée *en ce* que** une gaine en tissu (23) présente deux raccordements de remplissage (24) servant de raccordements respectivement d'entrée et d'écoulement (25, 26).

31. Structure réticulée selon une ou plusieurs des revendications 17 à 30, **caractérisée en ce que** un tuyau de contrôle (45) est fixé sur un raccordement de remplissage (24).

32. Structure réticulée selon une ou plusieurs des revendications 17 à 31, **caractérisée en ce que** un manchon de contrôle (50), dans lequel du béton (19) est injecté sous pression, est situé sur le tuyau de contrôle (45).

33. Structure réticulée selon une ou plusieurs des revendications 17 à 32, **caractérisée en ce que** les coins (20) qui se créent suite à la disposition en nappe des pneus, les uns à côté des autres, sont remplis avec du béton (19).

34. Structure réticulée selon une ou plusieurs des revendications 17 à 33, **caractérisée en ce que** les coins (20) sont comprimés avec du béton (19) contenu dans une gaine en tissu (23), laquelle présente un raccordement de remplissage (24).

35. Structure réticulée selon une ou plusieurs des revendications 17 à 34, **caractérisée en ce que** un anneau d'écartement (29) est fixé dans la gaine en tissu (23).

36. Structure réticulée selon une ou plusieurs des revendications 17 à 35, **caractérisée en ce que** la masse de remplissage est composée d'un substrat mélangé avec des germes et/ou des graines de végétaux.
